# EUROPEAN PATENT APPLICATION

(11) **EP 4 728 910 A1**
(43) Date of publication of application: **22.04.2026**
(21) Application number: 23941578.9
(22) Date of filing: 14.06.2023
(51) Int. Cl.: A24F 40/53

(54) **POWER SUPPLY UNIT FOR AEROSOL GENERATING DEVICE**

(71) Applicant: Japan Tobacco Inc., Tokyo 105-6927 (JP)
(72) Inventor: KAWANAGO Hiroshi, Tokyo 130-8603 (JP); AOYAMA Tatsunari, Tokyo 130-8603 (JP); YOSHIDA Ryo, Tokyo 130-8603 (JP)
(74) Representative: Hoffmann Eitle
(86) International application number: PCT/JP2023/022107
(87) International publication number: WO 2024/257274

(57) **Abstract**

A suction device (100), which is an example of an aerosol generating device, is provided with: a power supply part (111) configured so as to be able to supply electricity to a heater unit (60) that heats an aerosol source; an MCU (70) configured so as to be able to control the supplying of electricity from the power supply part (111) to the heater unit (60); and a remaining charge meter IC (20). The remaining charge meter IC (20) is configured so as to be able to take a parameter or signal representing the state of the suction device (100) as input and store information relating to the suction device (100) based on the parameter or signal in a memory (21), and if an abnormality in the suction device (100) is detected on the basis of the parameter or signal, the remaining charge meter IC (20) stores information relating to the abnormality in the memory (21). The MCU (70) is configured so as to be able to acquire information relating to the abnormality that is stored in the memory (21).

## Description

### TECHNICAL FIELD

The present disclosure relates to a power supply unit for an aerosol generating device.

### BACKGROUND ART

Aerosol generating devices that generate an aerosol to which a flavor component has been added and enable a user to inhale the generated aerosol, for example, are conventionally known. Such aerosol generating devices typically generate an aerosol by heating an aerosol source using a heating unit, which is an electrical resistance type or inductive heating type heater.

The following PTL 1 discloses the feature that, in a system including a protection circuit that outputs an alarm signal in response to a determination that an operating parameter of a vaporizer device meets a predetermined condition, and control logic connected to the protection circuit, the control logic causes the operation of the vaporizer device to change in response to receipt of the alarm signal.

### CITATION LIST

### PATENT LITERATURE

PTL 1 JP 2021-528084 A

### SUMMARY OF INVENTION

### TECHNICAL PROBLEM

It is desirable for safety to be taken into consideration when controlling the power supply unit of an aerosol generating device. However, there is still room for improvement in the conventional technology from the perspective of improving the safety of the power supply unit.

The present disclosure provides a power supply unit for an aerosol generating device that enables control of the aerosol generating device power supply unit with consideration given to safety, thereby improving safety.

### SOLUTION TO PROBLEM

One aspect of the present disclosure is a
a power supply unit for an aerosol generating device for generating an aerosol by heating an aerosol source, the power supply unit comprising
a power source unit configured to be capable of supplying power to a heating unit for heating the aerosol source,
a first control unit configured to be capable of controlling the supply of power from the power source unit to the heating unit, and
a second control unit configured to accept input of a parameter or a signal representing a state of the power supply unit and to be capable of storing information relating to the power supply unit based on the parameter or signal in a memory unit,
wherein,
when an abnormality is detected in the power supply unit on the basis of the parameter or the signal, the second control unit stores information relating to the detected abnormality in the memory unit as information relating to the power supply unit, and
the first control unit is further configured to be capable of acquiring the information relating to the abnormality stored in the memory unit.

Furthermore, another aspect of the present disclosure is
a power supply unit for an aerosol generating device for generating an aerosol by heating an aerosol source, the power supply unit comprising
a power source unit configured to be capable of supplying power to a heating unit for heating the aerosol source,
a first control unit configured to be capable of controlling the supply of power from the power source unit to the heating unit, and
a second control unit configured to accept input of a parameter or a signal representing a state of the power supply unit and to be capable of acquiring information indicating the remaining capacity of the power source unit on the basis of the parameter or signal,
wherein,
the parameter or signal includes a parameter or signal relating to the temperature of the heating unit, and
the second control is further configured to be capable of stopping the supply of power to the heating unit if an abnormality relating to the temperature of the heating unit is detected on the basis of the parameter or the signal.

### ADVANTAGEOUS EFFECTS OF INVENTION

According to the present disclosure, it is possible to provide a power supply unit for an aerosol generating device that enables control of the aerosol generating device power supply unit with consideration given to safety, thereby improving safety.

### BRIEF DESCRIPTION OF DRAWINGS

Fig. 1A is a schematic diagram schematically showing a first configuration example of an inhalation device.
Fig. 1B is a schematic diagram schematically showing a second configuration example of an inhalation device.
Fig. 2 is a drawing showing a first example of a circuit configuration of an inhalation device 100.
Fig. 3 is a drawing showing a first example of abnormality detection information.
Fig. 4 is a drawing showing a second example of abnormality detection information.
Fig. 5 is a drawing showing a third example of abnormality detection information.
Fig. 6 is a drawing showing a second example of a circuit configuration of an inhalation device 100.
Fig. 7 is a drawing showing a third example of a circuit configuration of an inhalation device 100.
Fig. 8 is a diagram showing an example of setting information defining control modes of an MCU 70 after various types of abnormalities have been detected.

### DESCRIPTION OF EMBODIMENTS

Embodiments of the power supply unit for an aerosol generating device according to the present disclosure will be described in detail below with reference to the drawings. The embodiments described below constitute an example in which the aerosol generating device of the present disclosure is applied to an inhalation device. Note that the drawings are to be viewed in the orientation of the reference signs. Furthermore, hereinafter, identical or similar elements may be assigned identical or similar reference signs, and descriptions thereof may be omitted or simplified as appropriate.

### [1. Configuration of inhalation device]

An inhalation device constituting an example of the aerosol generating device of the present disclosure is a device for generating a substance to be inhaled by a user. Hereinafter, the substance generated by the inhalation device will be described as being an aerosol. Alternatively, the substance generated by the inhalation device may be a gas.

### <1-1. First configuration example of inhalation device>

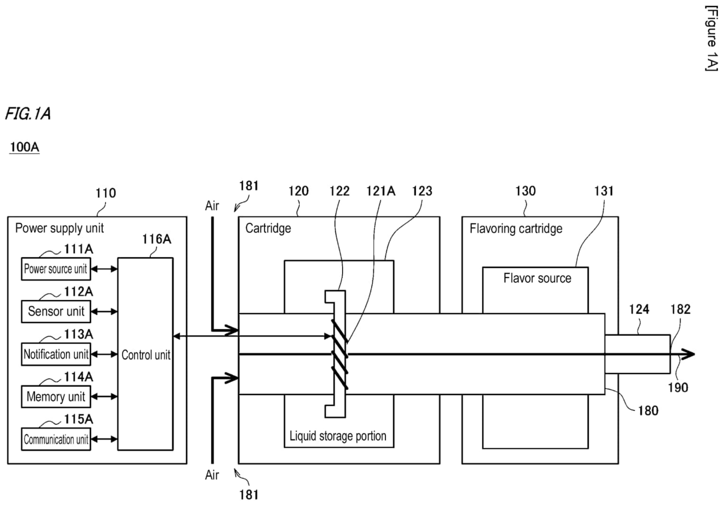

Fig. 1A is a schematic diagram schematically showing a first configuration example of the inhalation device. As shown in fig. 1A, an inhalation device 100A according to this configuration example includes a power supply unit 110, a cartridge 120, and a flavoring cartridge 130. The power supply unit 110 comprises a power source unit 111A, a sensor unit 112A, a notification unit 113A, a memory unit 114A, a communication unit 115A, and a control unit 116A. The cartridge 120 includes a heating unit 121A, a liquid guiding portion 122, and a liquid storage portion 123. The flavoring cartridge 130 includes a flavor source 131 and a mouthpiece 124. An air flow passage 180 is formed in the cartridge 120 and the flavoring cartridge 130.

The power source unit 111A stores electrical power. The power source unit 111A then supplies the electrical power to each component of the inhalation device 100A in accordance with control performed by the control unit 116A. In addition, the power source unit 111A is configured to be capable of being charged by means of power received from an external power source, not shown. Here, the external power source can, for example, be an AC (alternating current) adapter. It should be noted that the external power source is not limited to an AC adapter, and may be a portable charger (also referred to as a power bank), a PC (personal computer), a smartphone, or a tablet terminal, for example. The power source unit 111A may be configured, for example, by a rechargeable battery such as a lithium ion secondary battery.

The sensor unit 112A acquires various types of information relating to the inhalation device 100A. The sensor unit 112A is configured by, for example, a pressure sensor such as a capacitor microphone, a flow rate sensor or a temperature sensor, etc., and acquires values associated with inhalation by a user.

As an example, the sensor unit 112A may include a pressure sensor (also referred to as a "puff sensor") capable of acquiring a change in pressure in the inhalation device 100A caused by inhalation by the user. As another example, the sensor unit 112A may include a flow rate sensor capable of acquiring the flow rate of air or the like generated by inhalation by the user. Furthermore, the sensor unit 112A may include a temperature sensor (for example a battery thermistor TH1 or a heater thermistor TH2 described below) that makes it possible to acquire the temperature at a predetermined location (for example, the power source unit 111 or the heating unit 121A) within the power supply unit 110.

Furthermore, the sensor unit 112A may also be configured to include an input device, such as an operating button or an operating switch, for accepting input of information from the user. As an example, the sensor unit 112A may include an operating button serving as an input device that accepts an operation corresponding to an aerosol generation request from the user.

The notification unit 113A notifies the user of information. The notification unit 113A may, for example, be configured by a light-emitting device that emits light, a display device that displays images, a sound output device that outputs sound, or a vibration device that vibrates, etc.

The memory unit 114A stores various information (e.g., programs and data) allowing the inhalation device 100A to operate. The memory unit 114A may be configured by a non-volatile storage medium such as a flash memory, for example.

The communication unit 115A is a communication interface capable of performing communication conforming to any wired or wireless communication standard. Examples of communication standards that may be used include standards that employ Wi-Fi (registered trademark), Bluetooth (registered trademark), BLE (Bluetooth Low Energy, registered trademark), NFC (Near-Field Communication), or LPWA (Low Power Wide Area), for example.

The control unit 116A functions as an arithmetic processing device and a control device, and controls overall operation within the inhalation device 100A in accordance with various programs stored in the memory unit 114A, etc. For example, the control unit 116A controls the supply of power from the power source unit 111A to each component including the heating unit 121A, described below. The control unit 116A is realized by a CPU (central processing unit) or an electronic circuit such as a microprocessor, for example. As an example, the control unit 116A can be realized by an MCU (Micro Controller Unit).

The liquid storage portion 123 stores an aerosol source. The aerosol source is atomized to generate an aerosol. The aerosol source is a polyhydric alcohol such as glycerol or propylene glycol, or a liquid such as water, for example. The aerosol source may include a tobacco-derived or non-tobacco-derived flavor component. Furthermore, if the inhalation device 100A is a medical inhaler such as a nebulizer, the aerosol source may include a drug.

The liquid guiding portion 122 guides the aerosol source, which is a liquid stored in the liquid storage portion 123, from the liquid storage portion 123, and holds the aerosol source. The liquid guiding portion 122 is, for example, a wick formed by twisting either a fibrous material such as glass fibers or a porous material such as a porous ceramic. In this case, the aerosol source stored in the liquid storage portion 123 is guided by the capillary effect of the wick.

The heating unit 121A heats the aerosol source to atomize the aerosol source, thereby generating the aerosol, for example. In the example shown in fig. 1A, the heating unit 121A is configured as a coil obtained by winding a heat generating resistor, and is wrapped around the liquid guiding portion 122. A member having a PTC characteristic (PTC: Positive Temperature Coefficient), whereby electrical resistance increases in conjunction with an increase in temperature, or a member having an NTC characteristic (NTC: Negative Temperature Coefficient), whereby electrical resistance decreases in conjunction with an increase in temperature may, for example, be used for the heat generating resistor of the heating unit 121A. More specifically, the heat generating resistor of the heating unit 121A may, for example, be made of nichrome, stainless steel, or tungsten, etc.

The heating unit 121A generates heat when supplied with power from the power source unit 111A, for example. Furthermore, when the heating unit 121A generates heat, the aerosol source held in the liquid guiding portion 122 is heated and atomized, generating the aerosol. The supply of power to the heating unit 121A (hereinafter also referred to as 'power supply') may be implemented, for example, when the sensor unit 112A has detected that the user has started inhaling and/or that predetermined information has been input. The supply of power to the heating unit 121A may then be stopped when the sensor unit 112A detects that the user has finished inhaling and/or that predetermined information has been input.

The flavor source 131 is a component for imparting a flavor component to the aerosol. The flavor source 131 includes tobacco-derived or non-tobacco-derived flavor components. The flavor source 131 may be, for example, a tobacco-derived substance such as shredded tobacco, or a processed product obtained by molding a tobacco raw material into a granular form, a sheet form, or a powder form. Furthermore, the flavor source 131 may also include non-tobacco-derived materials made from plants other than tobacco (e.g., mint and herbs, etc.). As one example, the flavor source 131 may contain a flavoring component such as menthol. Furthermore, the flavor source 131 may be a stick-type member. When the inhalation device 100A is a medical inhaler, the flavor source 131 may contain a drug to be inhaled by a patient. It should be noted that the aerosol source 131 is not limited to a solid, and may equally be a liquid containing a flavor component, such as a polyhydric alcohol such as glycerol or propylene glycol, or water, for example. Furthermore, the flavor source 131 may be disposed inside a container such as a capsule.

The air flow passage 180 is a flow path for air to be inhaled by the user. The air flow passage 180 has a tubular structure with an air inflow hole 181, which is an inlet for air into the air flow passage 180, and an air outflow hole 182, which is an outlet for air from the air flow passage 180, at the two ends thereof. Part way along the air flow passage 180, the liquid guiding portion 122 is disposed on the upstream side (the side closer to the air inflow hole 181), and the flavor source 131 is disposed on the downstream side (the side closer to the air outflow hole 182). Air that flows in through the air inflow hole 181 as the user inhales is mixed with the aerosol generated by the heating unit 121A and is transported through the flavor source 131 to the air outflow hole 182, as shown by the arrow 190. When the mixed fluid of aerosol and air passes through the flavor source 131, the flavor component contained in the flavor source 131 is added to the aerosol.

The mouthpiece 124 is a member that is held in the user's mouth during inhalation. The air outflow hole 182 is disposed in the mouthpiece 124. The user holds the mouthpiece 124 in their mouth and inhales, making it possible to draw the mixed fluid of aerosol and air into the oral cavity.

A configuration example of the inhalation device 100A has been described above. The inhalation device 100A is, of course, not limited to the configuration described above, and various configurations, such as those illustrated below by way of example, may be adopted.

As an example, the inhalation device 100A need not include the flavoring cartridge 130. In this case, the cartridge 120 is provided with the mouthpiece 124.

As another example, the inhalation device 100A may further include a flavor source heating unit for heating the flavor source 131. The flavor source heating unit is configured in a film shape and is disposed so as to cover the outer periphery of the flavor source 131, for example. The flavor source heating unit then generates heat when supplied with power from the power source unit 111A, heating the flavor source 131 from the outer periphery thereof. It should be noted that the flavor source heating unit may also be configured with a blade-like form, piercing the flavor source 131 to heat the flavor source 131 from the inside, for example. Furthermore, the flavor source heating unit may be configured to heat the flavor source 131 by means of vibration or induction heating. Providing such a flavor source heating unit makes it possible to increase the temperature of the flavor source 131 and to increase the amount of flavor component added to the aerosol, as compared to a case in which the flavor source heating unit is not provided.

Furthermore, as another example, the inhalation device 100A may include a plurality of types of aerosol sources. A plurality of types of aerosol generated from the plurality of types of aerosol sources may be mixed within the air flow passage 180 to cause a chemical reaction, thereby generating yet more other types of aerosol.

Furthermore, the means for atomizing the aerosol source is not limited to heating by the heating unit 121A. For example, the means for atomizing the aerosol source may be vibration atomization or induction heating.

When the aerosol is generated by means of vibration, the inhalation device 100A comprises a vibration unit as the heating unit 121A, for example. For example, the vibration unit is configured by a plate-shaped member comprising a piezoelectric ceramic functioning as an ultrasonic vibrator. When the vibration unit vibrates, the aerosol source which has been guided to a surface of the vibration unit by means of the liquid guiding portion 122 is then atomized by means of ultrasound generated as the vibration unit vibrates, thereby generating the aerosol.

Furthermore, when the aerosol is generated by means of induction heating, the inhalation device 100A comprises a susceptor and an electromagnetic induction source as the heating unit 121A, for example. The susceptor is made of an electrically conductive material, such as a metal, and generates heat by means of electromagnetic induction. Furthermore, the susceptor is disposed adjacent to the liquid guiding portion 122. As an example, the susceptor is formed by a metallic conducting wire and is wound around the liquid guiding portion 122.

The electromagnetic induction source causes the susceptor to generate heat by electromagnetic induction. The electromagnetic induction source is formed by a coiled conducting wire, for example, and generates a magnetic field when supplied with an AC current from the power source unit 111A. When a magnetic field is generated, eddy currents are generated in the susceptor, and Joule heat is generated. The aerosol source held in the liquid guiding portion 122 is then heated by this Joule heat and atomized, generating the aerosol.

### <1-2. Second configuration example of inhalation device>

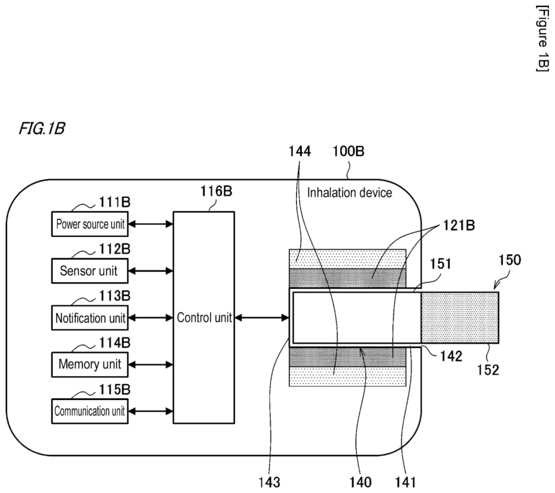

Fig. 1B is a schematic diagram schematically showing a second configuration example of the inhalation device. As shown in fig. 1B, an inhalation device 100B according to this configuration example comprises a power source unit 111B, a sensor unit 112B, a notification unit 113B, a memory unit 114B, a communication unit 115B, a control unit 116B, a heating unit 121B, an accommodating portion 140, and a heat insulating portion 144.

The power source unit 111B, sensor unit 112B, notification unit 113B, memory unit 114B, communication unit 115B, and control unit 116B are each substantially the same as the corresponding component included in the inhalation device 100A described above. Moreover, in the case of the inhalation device 100B shown in fig. 1B, the inhalation device 100B itself may also be referred to as the power supply unit of the inhalation device 100B.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 which has been inserted into the internal space 141 from the opening 142. For example, the accommodating portion 140 is a cylindrical body comprising the opening 142 and a bottom portion 143 serving as a bottom surface, and defines a columnar internal space 141. An air flow passage for supplying air to the internal space 141 is connected to the accommodating portion 140. An air inflow hole, which is an inlet for air into the air flow passage, is disposed in a side surface of the inhalation device 100, for example. An air outflow hole, which is an outlet for air from the air flow passage to the internal space 141, is disposed in the bottom portion 143, for example.

The stick-type substrate 150 comprises a substrate portion 151 and a mouthpiece portion 152. The substrate portion 151 contains an aerosol source. The aerosol source includes a tobacco-derived or non-tobacco-derived flavor component. If the inhalation device 100B is a medical inhaler such as a nebulizer, the aerosol source may include a drug. The aerosol source may, for example, be a liquid such as water or a polyhydric alcohol, for example glycerol or propylene glycol, containing the tobacco-derived or non-tobacco-derived flavor component, or may be a solid including the tobacco-derived or non-tobacco-derived flavor component. In a state in which the stick-type substrate 150 is held in the accommodating portion 140, at least part of the substrate portion 151 is accommodated in the internal space 141, and at least part of the mouthpiece portion 152 protrudes from the opening 142. Then, when the user holds the mouthpiece portion 152 protruding from the opening 142 in their mouth and inhales, air flows into the internal space 141 via the air flow passage, which is not illustrated in the drawings, and reaches the inside of the user's mouth together with the aerosol generated from the substrate portion 151.

In the example shown in fig. 1B, the heating unit 121B is configured as a film heater with an electrically conductive track made of a heat generating resistor (for example, a heat generating resistor having PTC properties) having a correlation between electrical resistance value and temperature, and is arranged to cover the outer circumference of the accommodating portion 140. Then, when the heating unit 121B generates heat, the substrate portion 151 of the stick-type substrate 150 is heated from the outer periphery, generating the aerosol. It should be noted that a heat generating resistor the same as that of the heating unit 121A described above may be used as the heat generating resistor of the heating unit 121B.

The heat insulating portion 144 prevents heat transfer from the heating unit 121B to other components. For example, the heat insulating portion 144 is configured from a vacuum heat insulating material or an aerogel heat insulating material, or the like.

A configuration example of the inhalation device 100B has been described above. The inhalation device 100B is, of course, not limited to the configuration described above, and various configurations, such as those illustrated below by way of example, may be adopted.

As one example, the heating unit 121B may be configured with a blade-like form and may be arranged so as to protrude into the internal space 141 from the bottom portion 143 of the accommodating portion 140. In this case, the blade-like heating unit 121B is inserted into the substrate portion 151 of the stick-type substrate 150 and heats the substrate portion 151 of the stick-type substrate 150 from the inside. As another example, the heating unit 121B may be arranged so as to cover the bottom portion 143 of the accommodating portion 140. Furthermore, the heating unit 121B may be configured from a combination of two or more from among a first heating unit covering the outer circumference of the accommodating portion 140, a blade-like second heating unit, and a third heating unit covering the bottom portion 143 of the accommodating portion 140.

As another example, the accommodating portion 140 may include an opening and closing mechanism such as a hinge for opening and closing part of an outer shell that forms the internal space 141. Then, by opening and closing the outer shell, the accommodating portion 140 may accommodate and clamp the stick-shaped substrate 150 that has been inserted into the internal space 141. In this case, the heating unit 121B may be provided on the clamping part of the accommodating portion 140, and may heat the stick-shaped substrate 150 while pressing the same.

Furthermore, the means for atomizing the aerosol source is not limited to heating by the heating unit 121B. For example, the means for atomizing the aerosol source may be induction heating. In this case, the inhalation device 100B comprises at least an electromagnetic induction source such as a coil for generating a magnetic field, instead of the heating unit 121B. A susceptor which generates heat by means of induction heating may be provided in the inhalation device 100B, or may be contained in the stick-type substrate 150.

Furthermore, the inhalation device 100B may additionally include the heating unit 121A, the liquid guiding portion 122, the liquid storage portion 123, and the air flow passage 180 according to the first configuration example, and the air flow passage 180 may supply air to the internal space 141. In this case, the mixed fluid of the aerosol generated by the heating unit 121A and air flows into the internal space 141 and is further mixed with the aerosol generated by the heating unit 121B, and reaches the oral cavity of the user.

Note that, hereinafter, the inhalation device 100A and the inhalation device 100B described above will also be referred to, without distinction, as the "inhalation device 100". Similarly, the power source unit 111A, etc. may be referred to as the "power source unit 111", the sensor unit 112A, etc. may be referred to as the "sensor unit 112", the notification unit 113A, etc. may be referred to as the "notification unit 113", the memory unit 114A, etc. may be referred to as the "memory unit 114", the communication unit 115A, etc. may be referred to as the "communication unit 115", the control unit 116A, etc. may be referred to as the "control unit 116", and the heating unit 121A, etc. may be referred to as the "heating unit 121".

### [2. Circuit configuration of inhalation device]

A circuit configuration of the inhalation device 100 will next be described. It should be noted that, in order to simplify the explanation, the explanation here will focus on the parts of the circuit of the inhalation device 100 that are related to aerosol generation, and illustrations and explanations for other parts will be omitted or simplified as appropriate. It should also be noted that only the main electronic components are shown and described here. That is, the inhalation device 100 may be configured with the addition of other electronic components, etc. as appropriate in addition to the electronic components described below.

### <2-1. First example of circuit configuration of inhalation device>

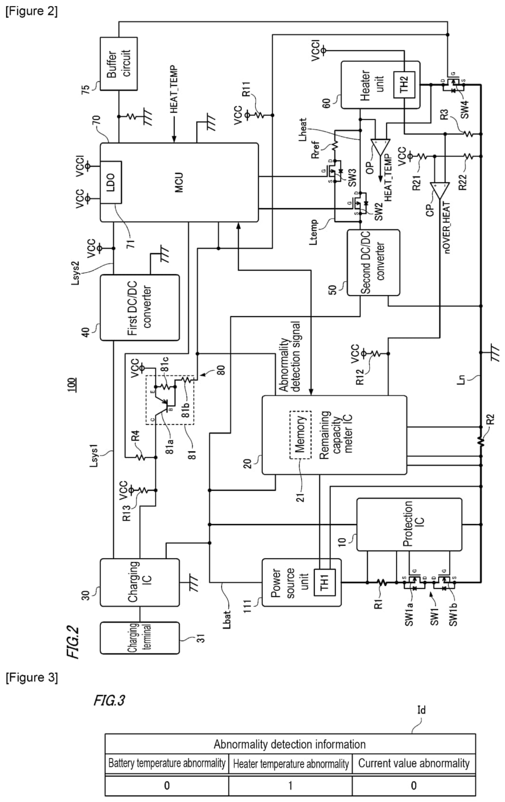

Fig. 2 is a view showing a first example of the circuit configuration of the inhalation device 100. In fig. 2, the power line indicated by the reference sign Ln is a power line connected to ground having a reference potential of the circuit of the inhalation device 100. Hereinafter, the power line Ln will also be referred to as the "ground line Ln" and the potential of the ground connected to the ground line Ln will be set to 0 [V]. Furthermore, unless explicitly stated otherwise, voltages hereinafter are assumed to mean the potential difference from the ground potential (i.e., 0 [V]).

As shown in fig. 2, in the present example, the inhalation device 100 comprises a power source unit 111, a protection IC 10, a remaining capacity meter IC, a charging IC 30, a first DC/DC converter 40, a second DC/DC converter 50, a heater unit 60, and an MCU 70. Here, the heater unit 60 is an example of the heating unit 121 and the MCU 70 is an example of the control unit 116.

The protection IC 10, the remaining capacity meter IC 20, charging IC 30, the first DC/DC converter 40, the second DC/DC converter 50, and the MCU 70 are ICs (integrated circuits) that integrate various elements such as transistors and resistors. Each of these ICs has terminals that electrically connect the interior and the exterior of the IC. In the following description, when it is stated that each IC is connected to other electronic components, unless otherwise specified, this means that prescribed terminals, excluding a ground terminal, among the terminals provided on each IC are electrically connected to the other electronic components, unless otherwise indicated. Also, the ground terminal of the terminals provided on each IC is connected to ground via the ground line Ln or the like.

### (Power source unit)

The power source unit 111 can be a rechargeable battery such as a lithium ion secondary battery, as discussed hereinabove, and is configured to be capable of outputting, for example, approximately 4 [V] as a terminal-to-terminal voltage between the positive terminal and the negative terminal. Hereinafter, the output voltage of the power source unit 111 is also referred to as the "power source voltage Vbat". The positive terminal of the power source unit 111 is connected to a power source voltage line Lbat, which is a power line different from the ground line Ln. The negative terminal of the power source unit 111 is connected to the ground line Ln.

### (Battery thermistor)

A battery thermistor TH1 configured to be capable of outputting a parameter relating to the temperature of the power source unit 111 (hereinafter also referred to as the "battery temperature") is provided in the vicinity of the power source unit 111. As an example, the battery thermistor TH1 is provided so as to come into contact with a predetermined location of the rechargeable battery constituting the power source unit 111.

The battery thermistor TH1 may, for example, be an NTC thermistor comprising a resistor having an NTC characteristic, or a PTC thermistor comprising a resistor having a PTC characteristic. In this case, the battery thermistor TH1 outputs the electrical resistance value of its own resistor as the parameter relating to the battery temperature. One end of the battery thermistor TH1 is connected to the remaining capacity meter IC 20 described below. The other end of the battery thermistor TH1 is connected to the ground line Ln.

### (Protection IC)

The protection IC 10 is an IC that functions as a control unit (in other words a controller) configured to accept input of a parameter or signal representing a state of the inhalation device 100 (more specifically, the power supply unit of the inhalation device 100), and to perform control to protect the power source unit 111 from overcurrents, etc., on the basis of the parameter or signal.

Parameters representing the state of the inhalation device 100 that can be cited include, for example, the current value of a current flowing at a predetermined point in the circuit of the inhalation device 100, the voltage value at a predetermined point in the circuit of the inhalation device 100, the amount of voltage drop due to a predetermined electronic component provided in the circuit of the inhalation device 100, or the temperature of a predetermined component provided in the inhalation device 100.

Furthermore, the signal representing the state of the inhalation device 100 can, for example, be a signal indicating that the inhalation device 100 has entered a predetermined state. More specifically, signals representing the state of the inhalation device 100 that can be cited include, for example, a signal indicating that the temperature of a predetermined component provided in the inhalation device 100 has exceeded a threshold, a signal indicating that the current value of a current flowing through a predetermined point in the circuit of the inhalation device 100 has exceeded a threshold, or a signal indicating that the voltage value at a predetermined point in the circuit of the inhalation device 100 has exceeded a threshold value.

In the present example, the protection IC 10 is connected to both ends of a resistor R1 having a predetermined electrical resistance value, provided in the ground line Ln. As a result, the amount of voltage drop due to the resistor R1 is input to the protection IC 10. The protection IC 10 then acquires the current value of the current flowing through the ground line Ln (i.e. the current output from the power source unit 111) on the basis of the amount of voltage drop due to the resistor R1, and can control a switch circuit SW1 provided in the ground line Ln on the basis of this current value.

The switch circuit SW1 is configured by a switch SW1a and a switch SW1b that are connected in series, for example. In the present example, the switch SW1a and the switch SW1b are N-channel MOSFETs (metal-oxide-semiconductor field effect transistors). Furthermore, the source terminal of the switch SW1a is connected to the negative terminal of the power source unit 111 via the resistor R1, the drain terminal of the switch SW1a is connected to the drain terminal of the switch SW1b, and the gate terminal of the switch SW1a is connected to the protective IC 10. In addition, the source terminal of the switch SW1b is connected to ground via the ground line Ln and the gate terminal of the switch SW1b is connected to the protection IC 10.

Furthermore, the switch SW1a and the switch SW1b each have a diode that allows current to flow only from the source terminal side to the drain terminal side. These diodes may, for example, be the respective body diodes of the switch SW1a and the switch SW1b, but are not limited thereto, and may equally be diodes provided separately from the switch SW1a and the switch SW1b.

According to the configuration of the present example, the protection IC 10 can turn the switch SW1a on (in other words, the conducting state) or off (in other words, the cut-off state) by controlling the gate voltage of the switch SW1a. Similarly, the protection IC 10 can turn the switch SW1b on or off by controlling the gate voltage of the switch SW1b.

For example, when the power source unit 111 is being charged, if the current value of the current flowing through the ground line Ln is greater than a predetermined threshold, the protection IC 10 turns off the switch SW 1b. As a result, the protection IC 10 can stop the power source unit 111 from being charged. It is therefore possible to protect the power source unit 111 from an overcurrent that may occur when the power source unit 111 is being charged.

Also, when the power source unit 111 is discharging, in other words, when power is being supplied from the power source unit 111 to each component, the protection IC 10 switches off the switch SW 1a if the current value of the current flowing through the ground line Ln is greater than a predetermined threshold. As a result, the protection IC 10 can stop the power source unit 111 from discharging. It is therefore possible to protect the power source unit 111 from an overcurrent that may occur when the power source unit 111 is discharging.

Furthermore, the protection IC 10 may be connected to the power source voltage line Lbat such that the power source voltage Vbat is input to the protection IC 10, and the protection IC 10 may control the switch circuit SW1 on the basis of the power supply voltage Vbat.

For example, if the power source voltage Vbat becomes higher than a predetermined threshold when the power source unit 111 is being charged, the protection IC 10 may turn the switch SW1b off, thereby stopping the power source unit 111 from being charged. In this way, it is possible to suppress overcharging of the power source unit 111.

Also, if the power source voltage Vbat falls below a predetermined threshold when the power source unit 111 is discharging, the protection IC 10 may turn the switch SW1a off, thereby stopping the power source unit 111 from discharging. In this way, it is possible to suppress over-discharge of the power source unit 111.

It should be noted that, although the resistor R1 and the switch circuit SW1 connected to the protection IC 10 are provided in the ground line Ln in the example described here, the configuration is not limited thereto. For example, the resistor R1 and the switch circuit SW1 may be provided in the power source voltage line Lbat.

### (Remaining capacity meter IC)

The remaining capacity meter IC 20 is an IC that functions as a control unit (in other words a controller) configured to be capable of accepting input of a parameter or a signal representing a state of the inhalation device 100, and storing information relating to the inhalation device 100, based on the parameter or signal, in a memory 21 serving as a memory unit capable of storing information, and is an example of a second control unit in the present disclosure. Here, the memory 21 may be a memory that is configured by a non-volatile storage medium such as a flash memory, for example, and that is provided inside the remaining capacity meter IC 20.

An example of information that can be cited relating to the inhalation device 100 acquired by the remaining capacity meter IC 20 is battery information including information indicating the remaining charge (hereinafter also referred to as 'remaining battery charge') of the power source unit 111. Here, the remaining battery charge can, for example, be the SOC (state of charge) of the power source unit 111. The battery information may also include, for example, information indicating the SOH (state of health) of the power source unit 111, the battery temperature, which is the temperature of the power source unit 111, the power source voltage Vbat, which is the output voltage of the power source unit 111, or the current value of the current output from the power source unit 111.

Also, another example of information that can be cited relating to the inhalation device 100, acquired by the remaining capacity meter IC 20, is information relating to abnormalities detected in the inhalation device 100 (also referred to hereinafter as "abnormality detection information"). A detailed description will be provided later, but the abnormality detection information may, for example, include information indicating that an abnormality has been detected, information representing a state of the inhalation device 100 when the abnormality was detected, or information indicating the type of the detected abnormality.

In the present example, the remaining capacity meter IC 20 is connected to both ends of a resistor R2 that has a predetermined electrical resistance value and that is provided in the ground line Ln. As a result, the amount of voltage drop due to the resistor R2 is input to the remaining capacity meter IC 20. The remaining capacity meter IC 20 then acquires the current value of the current flowing in the ground line Ln (i.e. the current output from the power source unit 111) on the basis of the voltage drop due to the resistor R2.

Furthermore, the remaining capacity meter IC 20 is connected to the power source voltage line Lbat. As a result, the power source voltage Vbat is input to the remaining capacity meter IC 20. In addition, the remaining capacity meter IC 20 is connected to one end of the battery thermistor TH1. As a result, the electrical resistance value of the battery thermistor TH1 (in other words, the amount of voltage drop due to the battery thermistor TH1) is input to the remaining capacity meter IC 20 as a parameter related to the temperature of the power source unit 111. The remaining capacity meter IC 20 then acquires the battery temperature on the basis of the electrical resistance value of the battery thermistor TH1. As an example, the remaining capacity meter IC 20 can acquire the battery temperature from the electrical resistance value of the battery thermistor TH1 using a table or formula defining a relationship between the electrical resistance value of the battery thermistor TH1 and the battery temperature.

The remaining capacity meter IC 20 then acquires the remaining battery charge on the basis of a plurality of parameters, such as the current value of the current flowing through the ground line Ln, the power source voltage Vbat, and the battery temperature. As an example, the remaining capacity meter IC 20 can acquire the remaining battery charge from the abovementioned plurality of parameters using a table or formula defining a relationship between the plurality of parameters and the remaining battery charge.

The remaining capacity meter IC 20 then acquires battery information, including information indicating the remaining battery charge acquired by the above processing, as information relating to the inhalation device 100. At this time, in addition to the information indicating the remaining battery charge, the remaining capacity meter IC 20 may also acquire battery information including information indicating the values of the above parameters used when acquiring the remaining battery charge.

The battery information acquired by the remaining capacity meter IC 20 is, for example, stored in the memory 21 and transmitted to the MCU 70, described below, at a predetermined timing. More specifically, the remaining capacity meter IC 20 is configured to be capable of communicating with the MCU 70, for example by means of an I2C (inter-integrated circuit) or the like, and utilizes this communication to transmit the battery information to the MCU 70. An example of the timing at which the remaining capacity meter IC 20 transmits the battery information may be the timing at which the remaining capacity meter IC 20 acquires the battery information, but it is not limited to this, and, for example, may be the timing at which the remaining capacity meter IC 20 receives a request from the MCU 70 to transmit the battery information. Furthermore, communication between the remaining capacity meter IC 20 and the MCU 70 is not limited to I2C, and any communication method may be employed. Furthermore, the remaining capacity meter IC 20 may, for example, handle the battery information in a RAM (Random Access Memory), not shown, without storing the battery information in the memory 21.

The remaining capacity meter IC 20 acquires the battery information including information indicating the remaining battery charge, and transmits the battery information to the MCU 70, thereby enabling the MCU 70 to ascertain the remaining battery charge and perform control based on the remaining battery charge. As an example, the MCU 70 can notify the user of the remaining battery charge using the notification unit 113. This improves user convenience.

Furthermore, the remaining capacity meter IC 20 may store the abnormality detection information in the memory 21. More specifically, the remaining capacity meter IC 20 is configured to be capable of detecting predetermined abnormalities of the inhalation device 100 on the basis of parameters such as the current value of the current flowing through the ground line Ln, discussed hereinabove, and the battery temperature, or a signal (nOVER_HEAT signal) input from a comparator CP, discussed hereinafter. Then, when an abnormality in the inhalation device 100 is detected on the basis of the input parameter or signal, the remaining capacity meter IC 20 stores abnormality detection information relating to the detected abnormality in the memory 21 as information relating to the inhalation device 100.

For example, if the battery temperature becomes higher than a predetermined threshold during charging and/or discharging of the power source unit 111, the remaining capacity meter IC 20 detects a "battery temperature abnormality", which is the abnormality that the battery temperature, which should be kept below the threshold, has exceeded the threshold.

Also, if the current value of the current flowing through the ground line Ln becomes greater than a predetermined threshold during charging and/or discharging of the power source unit 111, the remaining capacity meter IC 20 detects a "current value abnormality (in other words an overcurrent)" that the current value, which should be kept below the threshold, has exceeded the threshold value.

Furthermore, when the nOVER_HEAT signal (discussed hereinafter) is input from the comparator CP during charging and/or discharging of the power source unit 111, the remaining capacity meter IC 20 detects a "heater temperature abnormality," which is an abnormality that the temperature (hereinafter also referred to as "heater temperature") of the heater unit 60 (in other words, the heating unit 121), which should be kept below a threshold value, has exceeded the threshold value.

Then, when any of the above abnormalities is detected, the remaining capacity meter IC 20 stores the abnormality detection information in the memory 21. The abnormality detection information stored in the memory 21 by the remaining capacity meter IC 20 will be described move specifically below.

### (First example of abnormality detection information)

Fig. 3 is a drawing showing a first example of the abnormality detection information. As shown in fig. 3, the remaining capacity meter IC 20 stores, in the memory 21, information in which a "0" flag is associated with abnormalities that have not been detected and a "1" flag is associated with abnormalities that have been detected, as abnormality detection information Id. That is, the abnormality detection information Id shown in fig. 3 indicates that an abnormality has been detected, and that the type of the detected abnormality is the heater temperature abnormality. In addition, the abnormality detection information Id shown in fig. 3 indicates that neither the battery temperature abnormality nor the current value abnormality have been detected. It should be noted that the abnormality detection information Id here also includes information relating to abnormalities that have not been detected, but it is not limited to this.

### (Second example of abnormality detection information)

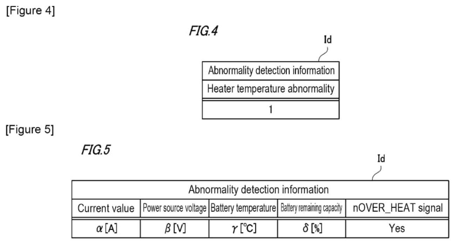

Fig. 4 is a drawing showing a second example of the abnormality detection information. Here, the description will focus on points of difference from the example shown in fig. 3, and descriptions of points that are the same as in the example shown in fig. 3 will be omitted or simplified.

As shown in fig. 4, the remaining capacity meter IC 20 may be configured to store, in the memory 21, abnormality detection information Id that does not contain information relating to abnormalities that have not been detected. In this case, for example, the remaining capacity meter IC 20 may store, in the memory 21, only information in which a "1" flag is associated with a detected abnormality, as the abnormality detection information Id. In this way, the size of the abnormality detection information Id can be reduced in comparison with the example shown in fig. 3, thereby making it possible to prevent the storage area of the memory 21 from being overwhelmed by the abnormality detection information Id.

Furthermore, the remaining capacity meter IC 20 may equally be configured to store, in the memory 21, abnormality detection information Id including information representing a state of the inhalation device 100 when an abnormality is detected.

### (Third example of abnormality detection information)

Fig. 5 is a drawing showing a third example of the abnormality detection information. Here, the description will focus on points of difference from the examples shown in fig. 3 or fig. 4, and descriptions of points that are the same as in the examples shown in fig. 3 or fig. 4 will be omitted or simplified.

As shown in fig. 5, the remaining capacity meter IC 20 may, for example, be configured to store, in the memory 21, abnormality detection information Id including information representing a state of the inhalation device 100 when an abnormality is detected. For example, the abnormality detection information Id shown in fig. 5 indicates that when the nOVER_HEAT signal was input from the comparator CP, that is, when the heater temperature abnormality was detected, the current value of the current flowing through the ground line Ln was "α [A]", the power source voltage Vbat was "β [V]", the battery temperature was "γ [°C]", and the remaining battery charge was "δ [%]".

Furthermore, the remaining capacity meter IC 20 may be configured to store, in the memory 21, only information corresponding to the detected abnormality, as abnormality detection information Id, for example, only information indicating the battery temperature if the battery temperature abnormality has been detected, or only information indicating the current value if the current value abnormality has been detected.

Furthermore, the remaining capacity meter IC 20 may be configured to store, in the memory 21, abnormality detection information Id including both information indicating the type of the detected abnormality, as shown in fig. 3 or fig. 4, and information representing the state of the inhalation device 100 when the abnormality was detected, as shown in fig. 5.

Furthermore, the remaining capacity meter IC 20 may configured to store or not store the abnormality detection information Id in the memory 21 depending on the type of the detected abnormality. For example, the remaining capacity meter IC 20 may be configured to store, in the memory 21, abnormality detection information Id relating to one type of abnormality (e.g. the heater temperature abnormality) when that abnormality is detected, while not storing abnormality detection information Id relating to another type of abnormality (e.g. the battery temperature abnormality) in the memory 21 when that type of abnormality is detected.

When the memory 21 is provided in the remaining capacity meter IC 20, as shown in fig. 2, the remaining capacity meter IC 20 transmits the abnormality detection information Id stored in the memory 21 to the MCU 70 at a predetermined timing. The timing at which the remaining capacity meter IC 20 transmits the abnormality detection information Id can, for example, be when the inhalation device 100 is activated for the first time after the abnormality is detected, but is not limited to this. For example, the remaining capacity meter IC 20 may transmit the abnormality detection information to the MCU 70 upon receiving a request from the MCU 70 to transmit the abnormality detection information.

The remaining capacity meter IC 20 transmits the abnormality detection information Id stored in the memory 21 to the MCU 70, thereby enabling the MCU 70 to acquire the abnormality detection information Id stored in the memory 21. Then, the MCU 70 can ascertain that an abnormality has been detected in the inhalation device 100 on the basis of the acquired abnormality detection information Id, and can perform control of the inhalation device 100 with consideration given to safety. Therefore, the safety of the inhalation device 100 can be improved. It should be noted that an example of the control performed by the MCU 70 will be described later, and will therefore not be described here.

Furthermore, in the present example, when any of the abovementioned abnormalities is detected, the remaining capacity meter IC 20 outputs a low-level voltage signal (hereinafter also referred to as an "abnormality detection signal") from a predetermined terminal. Hereinafter, the terminal of the remaining capacity meter IC 20 from which the abnormality detection signal is output will also be referred to as an "alert terminal."

As shown in fig. 2, the alert terminal from which the abnormality detection signal is output is connected, for example, to the gate terminal of a switch SW4, the MCU 70, and a switch circuit SW81. Here, the switch SW4 is a low-side switch of the heater unit 60, details of which will be described later. Further, the switch circuit SW81 is a circuit that functions as a switch for stopping the charging operation of the charging IC 30, discussed hereinafter. Moreover, in the present example, an open-drain system is employed for the alert terminal, and a signal line connecting the alert terminal and the switch SW4, etc., is supplied with a first system voltage Vcc, discussed hereinafter, via a resistor R11 that functions as a pull-up resistor.

According to the configuration of the present example, the alert terminal of the remaining capacity meter IC 20 is connected to the switch SW4, the MCU 70 and the switch circuit SW81, so that when the abnormality detection signal is output from the remaining capacity meter IC 20, a signal based on the abnormality detection signal can be input to the switch SW4, the MCU 70, and the switch circuit SW81. At this time, the abnormality detection signal output from the remaining capacity meter IC 20 may be input directly to the switch SW4, the MCU 70, and the switch circuit SW81, or signals that have been corrected (in other words, adjusted) to have a voltage value and a current value that take into account the hardware characteristics of the switch SW4, the MCU 70, and the switch circuit SW81 may respectively be input.

### (Charging IC)

The charging IC 30 is an IC that is provided between a power receiving unit that receives power from an external power source and the power source unit 111, and functions as a control unit (in other words a controller) configured to be capable of charging the power source unit 111 by supplying power received from the external power source by the power receiving unit to the power source unit 111.

In the present example, the power receiving unit is a charging terminal 31 comprising a terminal (e.g. a VBUS terminal) that receives power from the external power source. The charging terminal 31 may, for example, be a receptacle that complies with various standards, such as USB Type-C (registered trademark), microUSB or Lightning (registered trademark). Moreover, the power receiving unit 102 is not limited to such a receptacle, and may be configured, for example, by a power receiving coil or the like configured to be capable of contactlessly receiving power delivered from the external power source.

The charging IC 30 is connected to each of the charging terminal 31 and the power source voltage line Lbat, and charges the power source unit 111 by supplying the power of the external power source received by the charging terminal 31 to the power source unit 111 via the power source voltage line Lbat.

Furthermore, the charging IC 30 is connected to the first DC/DC converter 40 via a first system voltage line Lsys1, which is a power line different from the power source voltage line Lbat and the ground line Ln, and is configured to be capable of supplying the first DC/DC converter 40 with power from the external power source, received by the charging terminal 31, or power based on the power from the power source unit 111.

When supplying power to the first DC/DC converter 40, the charging IC 30 may be configured to supply the power received from the external power source or the power of the power source unit 111 directly to the first DC/DC converter 40, or to supply power that has been corrected (in other words, adjusted) to have a voltage value and a current value that take into account the hardware characteristics of the first DC/DC converter 40. As an example, the charging IC 30 supplies the power of the power source unit 111 received via the power source voltage line Lbat to the first DC/DC converter 40 via the first system voltage line Lsys1.

It should be noted that in the present example, the charging IC 30 is provided with a charge enable terminal, and is configured to perform the charging operation on the condition that an input to the charge enable terminal is at a low level. In other words, if the input to the charge enable terminal is at a high level, the charging IC 30 stops the charging operation. Then, when the charging IC 30 stops the charging operation, charging of the power source unit 111 by means of the power received from the external power supply is stopped. It should be noted that the low-level or high-level signal input to the charge enable terminal is controlled, for example, by the MCU 70.

### (First DC/DC converter)

The first DC/DC converter 40 is an IC that is used in combination with a power inductor, not shown, and that functions as a switching regulator for converting an input DC voltage into a prescribed DC voltage.

In the present example, the first DC/DC converter 40 is connected to each of the first system voltage line Lsys1 and a second system voltage line Lsys2. Here, the second system voltage line Lsys2 is a power line different from the power source voltage line Lbat and the first system voltage line Lsys1 discussed hereinabove, and is a power line used to supply power to the MCU 70, etc.

Then, the first DC/DC converter 40 generates power having the first system voltage Vcc from the power supplied via the first system voltage line Lsys1 and outputs the generated power to the second system voltage line Lsys2. As a result, power having the first system voltage Vcc can be supplied to the MCU 70, etc., via the second system voltage line Lsys2. It should be noted that the system voltage Vcc is the voltage required for operation of the MCU 70, etc., and can be 3.3 [V], for example.

### (Second DC/DC converter)

The second DC/DC converter 50 is an IC that is used in combination with a power inductor, not shown, and that functions as a switching regulator for converting an input DC voltage into a prescribed DC voltage.

In the present example, the second DC/DC converter 50 is connected to each of the power source voltage line Lbat, a heating voltage line Lheat and a temperature measurement line Ltemp. Here, the heating voltage line Lheat and the temperature measurement line Ltemp are power lines different from the power source voltage line Lbat, the first system voltage line Lsys1 and the second system voltage line Lsys2 discussed hereinabove, and are power lines used to supply power to the heater unit 60.

More specifically, the heating voltage line Lheat and the temperature measurement line Ltemp are provided in parallel with the second DC/DC converter 50 and the heater unit 60. Furthermore, a switch SW2 is provided in the heating voltage line Lheat. Meanwhile, a switch SW3 and a resistor Rref that are connected in series are provided in the temperature measurement line Ltemp. Here, the resistor Rref is a resistor having a predetermined electrical resistance value.

In this example, the switch SW2 and the switch SW3 are P-channel MOSFETs. Then, the source terminal of the switch SW2 is connected to the second DC/DC converter 50, the drain terminal of the switch SW2 is connected to one end of the heater unit 60, and the gate terminal of the switch SW2 is connected to the MCU 70. The, the source terminal of the switch SW3 is connected to the second DC/DC converter 50, the drain terminal of the switch SW3 is connected to one end of the heater unit 60 via the resistor Rref, and the gate terminal of the switch SW3 is connected to the MCU 70.

Furthermore, a body diode that allows current to flow only from the drain terminal side to the source terminal side is formed in each of the switch SW2 and switch SW3.

The second DC/DC converter 50 generates power having the heating voltage Vheat from the power supplied via the power source voltage line Lbat, and outputs the generated power to the heating voltage line Lheat or the temperature measurement line Ltemp. As a result, power having the heating voltage Vheat can be supplied to the heater unit 60 via the heating voltage line Lheat or the temperature measurement line Ltemp. More specifically, when the switch SW2 is on, power is supplied to the heater unit 60 via the heating voltage line Lheat. Meanwhile, when the switch SW3 is on, power is supplied to the heater unit 60 via the temperature measurement line Ltemp. Moreover, the switch SW2 and the switch SW3 are controlled by the MCU 70 so as not to be turned on at the same time.

Furthermore, the heating voltage Vheat generated by the second DC/DC converter 50 is a higher voltage than the first system voltage Vcc (for example, 3.3 [V]) to allow the heater unit 60 (that is, the heating unit 121) to generate heat efficiently and rapidly, and can, for example, be 5 [V].

### (Heater unit)

The heater unit 60 is configured mainly of a heat generating resistor (hereinafter also referred to as "resistor Rheat") constituting the heating unit 121. One end of the heater unit 60 (in other words, the resistor Rheat) is connected to the second DC/DC converter 50 via the heating voltage line Lheat and the temperature measurement line Ltemp. The other end of the heater unit 60 is connected to the ground line Ln via the switch SW4, which functions as a low-side switch for the heater unit 60.

In the present example, the switch SW4 is an N-channel MOSFET. Then, the source terminal of the switch SW4 is connected to ground via the ground line Ln, the drain terminal of the switch SW4 is connected to the other end of the heater unit 60, and the gate terminal of the switch SW4 is connected to the MCU 70 and the remaining capacity meter IC 20 (more specifically the alert terminal).

Furthermore, a body diode that allows current to flow only from the source terminal side to the drain terminal side is formed in the switch SW4.

### (Heater thermistor)

A heater thermistor TH2 configured to be capable of outputting a parameter relating to the temperature of the heater unit 60 (i.e. the heater temperature) is provided in the vicinity of the heater unit 60. The heater thermistor TH2 may, for example, be an NTC thermistor comprising a resistor having an NTC characteristic. In this case, the heater thermistor TH2 outputs the electrical resistance value of its own resistor as a parameter relating to the heater temperature.

One end of the heater thermistor TH2 is connected, for example, to an LDO 71, discussed hereinafter. The other end of the heater thermistor TH2 is connected, for example, to an inverting input terminal of a comparator CP, discussed hereinafter. It should be noted that in the present example, one end of the heater thermistor TH2 is connected to the LDO 71 so that a second system voltage Vcc1, discussed hereinafter, is supplied to the heater thermistor TH2, but the present invention is not limited to this. For example, if the heater thermistor TH2 is capable of accepting the first system voltage Vcc, in terms of hardware, one end of the heater thermistor TH2 may be connected to the second system voltage line Lsys2 so that the first system voltage Vcc is supplied to the heater thermistor TH2. In such a case, the inhalation device 100 (for example, the MCU 70) does not need to be provided with the LDO 71 discussed hereinafter.

### (Operational amplifier)

An operational amplifier OP is an electronic component that is provided with a non-inverting input terminal, an inverting input terminal and an output terminal, and that outputs a voltage signal obtained by amplifying the difference between the inputs to the non-inverting input terminal and the inverting input terminal from the output terminal, and may, for example, be realized by an IC that integrates various elements such as transistors and resistors.

In the present example, the non-inverting input terminal of the operational amplifier OP is connected between the resistor Rref of the temperature measurement line Ltemp and the heater unit 60. The inverting input terminal of the operational amplifier OP is connected to ground line Ln. The output terminal of the operational amplifier OP is connected to the MCU 70.

According to the configuration of the present example, when the switch SW4, which is the low-side switch of the heater unit 60, is turned on and the switch SW3 of the temperature measurement line Ltemp is turned on, the voltage divided by the resistor Rref of the temperature measurement line Ltemp and the resistor Rheat of the heater unit 60 is input to the non-inverting input terminal of the operational amplifier OP. Therefore, at this time, the operational amplifier OP outputs to the MCU 70 a voltage signal (hereinafter also referred to as the "HEAT_TEMP signal") obtained by amplifying the voltage divided by the resistor Rref and the resistor Rheat. The HEAT_TEMP signal changes depending on the electrical resistance value of the resistor Rheat, that is, the heater temperature. Therefore, the MCU 70 can acquire the heater temperature on the basis of the HEAT_TEMP signal.

### (Comparator)

The comparator CP is an electronic component that is provided with a non-inverting input terminal, an inverting input terminal, and an output terminal, and that compares a signal input to the non-inverting input terminal and a signal input to the inverting input terminal and switches an output signal from the output terminal between a high level and a low level depending on which signal is larger, and the comparator CP can, for example, be realized by an IC that integrates various elements such as transistors and resistors.

In the present example, a predetermined reference voltage is input to the non-inverting input terminal of the comparator CP. It should be noted that a voltage obtained by dividing the first system voltage Vcc using a resistor R21 and a resistor R22, each having a predetermined electrical resistance value, is here input to the non-inverting input terminal of the comparator CP as the reference voltage, but the present invention it is not limited to this. The reference voltage may be any voltage that is substantially constant (i.e., stable), and for example, a reference voltage generated by any power supply IC, such as an LDO (Low Drop Out), may be input to the non-inverting input terminal of the comparator CP.

Furthermore, the inverting input terminal of the comparator CP is connected between the other end of the heater thermistor TH2 and one end of a resistor R3 having a predetermined electrical resistance value. The other end of the resistor R3 is connected to the ground line Ln. As a result, a voltage divided by the heater thermistor TH2 and the resistor R3 can be input to the inverting input terminal of the comparator CP.

The output terminal of the comparator CP is then connected to the remaining capacity meter IC 20. Moreover, in the present example, an open-drain scheme is employed for the output terminal of the comparator CP, and the first system voltage Vcc is supplied via a resistor R12 that functions as a pull-up resistor to a signal line connecting the output terminal of the comparator CP and the remaining capacity meter IC 20.

According to the configuration of the present example, when the electrical resistance value of the heater thermistor TH2 decreases in association with an increase in the heater temperature, the voltage divided by the heater thermistor TH2 and the resistor R3, that is, the voltage input to the inverting input terminal of the comparator CP, increases. Then, on the condition that the voltage input to the inverting input terminal of the comparator CP has increased and reached the reference voltage, in other words, a threshold, input to the non-inverting input terminal of the comparator CP, the comparator CP outputs a low-level voltage signal (hereinafter also referred to as the "nOVER_HEAT signal") to the remaining capacity meter IC 20.

Further, in the present example, when the heater temperature has increased and reached a predetermined threshold, the voltage input to the inverting input terminal of the comparator CP also reaches the threshold (that is, the reference voltage) and the comparator CP outputs the nOVER_HEAT signal. That is, the nOVER_HEAT signal can be said to be a signal related to the heater temperature (in other words, the temperature of the heating unit 121), and, more specifically, can also be said to be a signal indicating that the heater temperature has exceeded a threshold.

### (MCU)

The MCU 70 is, for example, an IC constituting the control unit 116 discussed hereinabove, and is an example of the first control unit in the present disclosure. More specifically, the MCU 70 is configured mainly by a processor that performs various operations, and the processor executes pre-stored programs to control the operation of specific controlled objects provided in the circuits of the inhalation device 100.

As discussed hereinabove, the MCU 70 is connected to the gate terminal of the switch SW4, which is the low-side switch of the heater unit 60. This allows the MCU 70 to control the gate voltage of the switch SW4 to turn the switch SW4 on and off. The MCU 70 can then enable power to be supplied to the heater unit 60 by turning the switch SW4 on, and conversely, can prevent power from being supplied to the heater unit 60 by turning the switch SW4 off. As shown in fig. 2, a buffer circuit 75 or the like for correcting an input voltage may be provided between the MCU 70 and switch SW4, as appropriate.

Furthermore, the MCU 70 is connected to the gate terminal of the switch SW2 in the heating voltage line Lheat. This allows the MCU 70 to control the gate voltage of the switch SW2 to turn the switch SW2 on and off.

Furthermore, the MCU 70 is connected to the gate terminal of the switch SW3 in the temperature measurement line Ltemp. This allows the MCU 70 to control the gate voltage of the switch SW3 to turn the switch SW3 on and off.

In addition, the MCU 70 is connected to the charge enable terminal of the charging IC 30 via a resistor R4 having a predetermined electrical resistance value. Furthermore, the first system voltage Vcc is supplied to a signal line connecting the MCU 70 and the charge enable terminal of the charging IC 30 via, for example, a resistor R13 that functions as a pull-up resistor.

Thus, in the inhalation device 100, since the MCU 70 is connected to the charge enable terminal of the charging IC 30, the MCU 70 can control the input to the charge enable terminal of the charging IC 30 to execute or stop the charging operation of the charging IC 30. Furthermore, the MCU 70 can stop the charging of the power source unit 111 by stopping the charging operation of the charging IC 30. It should be noted that specific control examples for each controlled object controlled by the MCU 70 will be discussed hereinafter, and will therefore not be described here.

The MCU 70 also includes, for example, the LDO (Low drop out) 71, which steps down the first system voltage Vcc supplied to the MCU 70 to generate the second system voltage Vccl. The LDO 71 is connected, for example, to one end of the heater thermistor TH2, and supplies power having the generated second system voltage Vccl to the heater thermistor TH2.

### (Charging stop circuit)

Incidentally, it is conceivable that the MCU 70 may stop unintentionally (for example, what is known as a freeze or a breakdown) due to some reason while the power source unit 111 is being charged. From the viewpoint of ensuring the safety of the inhalation device 100, even if the MCU 70 stops in this way, it is desirable to appropriately stop charging the power source unit 111.

To this end, the inhalation device 100 further comprises a charging stop circuit 80 configured to be capable of stopping the charging operation of the charging IC 30 without the intervention of the MCU 70. The charging stop circuit 80 is provided, for example with a switch circuit SW81 that is capable of controlling the input to the charge enable terminal of the charging IC 30.

In the present example, the switch circuit SW81 is configured by a bias resistor built-in transistor (BRT) including a BJT (bipolar junction transistor) 81A, a resistor 81b, and a resistor 81c. Then, the base of the BJT 81a is connected to the alert terminal of the remaining capacity meter IC 20 via the resistor 81b. The emitter of the BJT 81a is connected to the second system voltage line Lsys2 to which the first system voltage Vcc is supplied, and is also connected to the base of the BJT 81a via the resistor 81c. The collector of BJT 81a is connected to the charge enable terminal of the charging IC 30. It should be noted that, in the present example, a signal line connecting the collector of BJT 81a and the charge enable terminal of the charging IC 30 is common with the signal line connecting the MCU 70 and the charge enable terminal of the charging IC 30, discussed hereinabove, and is supplied, for example, with the first system voltage Vcc via a resistor R13 that functions as a pull-up resistor.

It should be noted that the circuit configuration shown in fig. 2 is merely an example, and is not limiting For example, in the example shown in fig. 2, the other end of the heater thermistor TH2 is connected to the comparator CP, and the nOVER_HEAT signal from the comparator CP can be input to the remaining capacity meter IC 20, but this is not limiting.

### <2-2. Second example of circuit configuration of inhalation device>

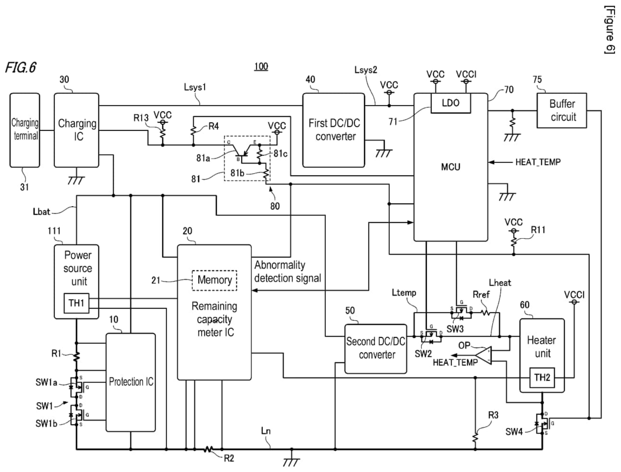

Fig. 6 is a view showing a second example of the circuit configuration of the inhalation device 100. Here, the description will focus on points of difference from the example shown in fig. 2, and descriptions of points that are the same as in the example shown in fig. 2 will be omitted or simplified.

As shown in fig. 6, the other end of the heater thermistor TH2 may be connected to the remaining capacity meter IC 20, allowing the electrical resistance value of the heater thermistor TH2 (in other words, the amount of voltage drop due to the heater thermistor TH2) to be input to the remaining capacity meter IC 20 as a parameter relating to the heater temperature. It is important to note that, in this case, the terminal of the remaining capacity meter IC 20 that is connected to the heater thermistor TH2 must be an analog input terminal.

Connecting the heater thermistor TH2 to the remaining capacity meter IC 20, as shown in fig. 6, allows the remaining capacity meter IC 20 to acquire the heater temperature on the basis of the amount of voltage drop due to the heater thermistor TH2, and to detect a heater temperature abnormality by comparing the heater temperature with a predetermined threshold. In addition, this also allows the abnormality detection information Id including information indicating the heater temperature when the heater temperature abnormality was detected to be stored in the memory 21 when a heater temperature abnormality is detected.

Furthermore, in the examples shown in fig. 2 and fig. 6, the memory 21 in which the abnormality detection information Id is stored is provided in the remaining capacity meter IC 20, but this is not limiting. The memory 21 may equally be provided outside the remaining capacity meter IC 20.

### <2-3. Third example of circuit configuration of inhalation device>

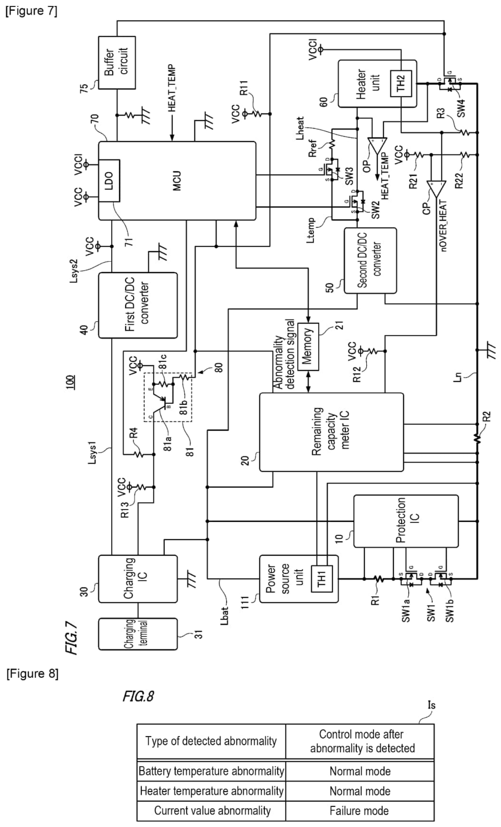

Fig. 7 is a view showing a third example of the circuit configuration of the inhalation device 100. Here, the description will focus on points of difference from the examples shown in fig. 2 or fig. 6, and descriptions of points that are the same as in the examples shown in fig. 2 or fig. 6 will be omitted or simplified.

As shown in fig. 7, the memory 21 may be provided outside the remaining capacity meter IC 20 in such a way as to be accessible to both the MCU 70 and the remaining capacity meter IC 20. In this case, the remaining capacity meter IC 20 may access the memory 21 when an abnormality is detected, and store the abnormality detection information Id in the memory 21. Furthermore, the MCU 70 may access the memory 21 at a predetermined timing, such as when the inhalation device 100 is activated, and, if abnormality detection information Id is stored in the memory 21, acquire the abnormality detection information Id.

Furthermore, in the example shown in fig. 2, for example, multiple parameters or signals related to the inhalation device 100, such as the electrical resistance value of the resistor R2, the power source voltage Vbat, the electrical resistance value of the battery thermistor TH1, and the nOVER_HEAT signal from the comparator CP, may be input to the remaining capacity meter IC 20, but this is not limiting. For example, any or all of these parameters or signals need not be input to the remaining capacity meter IC 20, and other parameters or signals may be input to the remaining capacity meter IC 20 in addition to these parameters or signals.

### [3. Operation of inhalation device]

An example of the operation of the inhalation device 100 will now be described. The MCU 70 serving as the control unit 116 of the inhalation device 100 causes aerosol to be generated by supplying power from the power source unit 111 to the heater unit 60 (more specifically, the resistor Rheat), serving as the heating unit 121, in response to an aerosol generation request from the user.

Here, the aerosol generation request may be an operation to instruct the start of heating (hereinafter also referred to as a "heating start operation"), for example. The heating start operation may, for example, be pressing of a predetermined operation button (not depicted) provided in the inhalation device 100. Alternatively, the heating start operation may be insertion of a stick-type substrate 150 into the inhalation device 100, or drawing on the inhalation device 100. Moreover, the aerosol generation request is not limited to a direct operation on the inhalation device 100, and may be, for example, reception of predetermined information from another device capable of communicating with the inhalation device 100, such as a smartphone. The MCU 70 may detect the aerosol generation request on the basis of information acquired by the sensor unit 112 or the communication unit 115, for example.

As a more detailed explanation of aerosol generation, if the inhalation device 100 is the inhalation device 100B shown in fig. 1B, for example, the MCU 70 serving as the control unit 116B causes an aerosol to be generated by controlling the temperature of the heater unit 60 (that is, the heater temperature), serving as the heating unit 121B, on the basis of a pre-prepared heating profile, upon detection of the heating start operation (e.g., pressing of a predetermined operation button).

Here, the heating profile can, for example, be information that defines a time series transition of a target temperature, which is a target value of the heater temperature. Moreover, the heating profile is typically designed such that, when the user inhales the aerosol generated from the stick-type substrate 150, etc., the flavor tasted by the user is optimized. Therefore, controlling the heater temperature on the basis of the heating profile makes it possible to optimize the flavor tasted by the user, enabling a high-quality smoking experience to be provided to the user.

To elaborate on the heater temperature control based on a heating profile (hereinafter also referred to simply as "heating control"), the MCU 70 controls the heater temperature on the basis of a deviation between the target temperature corresponding to the elapsed time from the start of the heating control, and the actual heater temperature (hereinafter also referred to as the "actual temperature"). At this time, the MCU 70 controls the heater temperature such that the time series transition of the actual temperature is similar to the time series transition of the target temperature defined in the heating profile.

More specifically, in the heating control, for example, the MCU 70 acquires the actual temperature with a predetermined period (for example, every 50 [ms]) on the basis of the HEAT_TEMP signal from the operational amplifier OP. At this time, the MCU 70 acquires the actual temperature on the basis of the HEAT_TEMP signal from the operational amplifier OP when the switch SW4, which is the low-side switch of the heater unit 60, is turned on, and the switch SW2 of the heating voltage line Lheat is turned off and the switch SW3 of the temperature measurement line Ltemp is turned on. It should be noted that the MCU 70 can, for example, acquire the actual temperature from the electrical resistance value of the resistor Rheat represented by the HEAT_TEMP signal, using a table or a formula that defines a relationship between the electrical resistance value of the resistor Rheat (in other words, the amount of voltage drop due to the resistor Rheat) and the heater temperature.

The MCU 70 then controls the power supplied to the heater unit 60 on the basis of the acquired actual temperature and the target temperature at that time, such that the actual temperature approaches the target temperature. At this time, the MCU 70 may, for example, adjust the duty ratio of power pulses supplied to the heater unit 60 via the heating voltage line Lheat, by controlling the on/off of the switch SW2 in the heating voltage line Lheat in a state in which the switch SW4, which is the low-side switch of the heater unit 60, is turned on.

Furthermore, if the inhalation device 100 is the inhalation device 100A shown in fig. 1A, the MCU 70 serving as the control unit 116A causes an aerosol to be generated by supplying predetermined power to the heater unit 60, serving as the heating unit 121A, when an inhalation action on the inhalation device 100A is detected on the basis of the detection result of a puff sensor, not shown. At this time, the power supplied to the heater unit 60 is predetermined by the manufacturer of the inhalation device 100A such that, for example, a suitable amount of aerosol including an appropriate amount of a flavor component is generated. This allows the flavor tasted by the user to be optimized, making it possible to provide the user with a high-quality smoking experience.

Furthermore, when there is a charging start request from the user, the charging IC 30 of the inhalation device 100 supplies power from an external power source received via the charging terminal 31 to the power source unit 111, thereby starting charging of the power source unit 111. Here, the charging start request may be the establishment of an electrical connection between the inhalation device 100 and the external power source, for example. Furthermore, the charging start request may further comprise the performance of a predetermined operation once the electrical connection between the inhalation device 100 and the external power source has been established. Pressing a predetermined operation button (not shown) provided in the inhalation device 100 is one possible example of this operation. Furthermore, when the power source unit 111 is being charged, the charging IC 30 may control the charging current and/or charging voltage for charging the power source unit 111 in accordance with instructions from the MCU 70.

The remaining capacity meter IC 20 of the inhalation device 100 acquires the battery information with a predetermined period on the basis of a parameter or signal that is input when the power source unit 111 is charging and/or discharging, as described above, and transmits the acquired battery information to the MCU 70.

In addition, the remaining capacity meter IC 20 detects specific abnormalities in the inhalation device 100, such as the battery temperature abnormality, current value abnormality, and heater temperature abnormality discussed hereinabove, on the basis of parameters or signals that are input when the power source unit 111 is charging and/or discharging.

The remaining capacity meter IC 20 then outputs the abnormality detection signal from the alert terminal when an abnormality is detected. When the remaining capacity meter IC 20 outputs the abnormality detection signal, the switch SW4, which is the low-side switch of the heater unit 60, is turned off. Then, when the switch SW4 is turned off, power is no longer supplied to the heater unit 60, even if the switch SW2 of the heating voltage line Lheat or the switch SW3 of the temperature measurement line Ltemp is on. It is therefore possible to stop the supply of power to the heater unit 60 even if the MCU 70 stops operating while the switch SW2 or the switch SW3 is on. This makes it possible to restrict the supply of unintended power to the heater unit 60 when the MCU 70 is not operating normally, thereby ensuring the safety of the inhalation device 100.

Furthermore, when the remaining capacity meter IC 20 outputs the abnormality detection signal, the switch circuit 81 of the charging stop circuit 80 is turned on. When the switch circuit 81 is turned on, the input to the charge enable terminal of the charging IC 30 is set to the high level, and the charging operation of the charging IC 30 is stopped. When the charging IC 30 stops the charging operation, charging of the power source unit 111 stops. Therefore, even if the MCU 70 stops while the power source unit 111 is being charged, charging of the power source unit 111 can be stopped appropriately, making it possible to ensure the safety of the inhalation device 100.

Furthermore, when the remaining capacity meter IC 20 outputs the abnormality detection signal, the abnormality detection signal can be input to the MCU 70. That is, the remaining capacity meter IC 20 can notify the MCU 70 that an abnormality has occurred in the inhalation device 100 by means of the abnormality detection signal. Therefore, if the MCU 70 can operate normally when an abnormality has been detected, the MCU 70 can execute appropriate processing, such as processing to be performed when an abnormality occurs, on the basis of the abnormality detection signal received from the remaining capacity meter IC, for example stopping the charging operation of the charging IC 30 to stop the charging of the power supply unit 111, or turning off the switch SW4 to stop the supply of power to the heater unit 60, thereby making it possible to ensure the safety of the inhalation device 100.

Furthermore, the MCU 70 can acquire the abnormality detection information Id stored in the memory 21 at a predetermined timing. For example, if the memory 21 is provided in the remaining capacity meter IC 20, as shown in fig. 2, when the inhalation device 100 is activated, the remaining capacity meter IC 20 determines whether or not there is abnormality detection information Id stored in the memory 21, and if there is abnormality detection information Id stored in the memory 21, the remaining capacity meter IC 20 transmits the abnormality detection information Id to the MCU 70. As a result, when the inhalation device 100 is activated for the first time after an abnormality has been detected, for example, the MCU 70 can acquire the abnormality detection information Id that was stored in the memory 21 due to the detection of the abnormality.

Furthermore, if the MCU 70 has direct access to the memory 21, as shown in fig. 7, the MCU 70 may access the memory 21 when the inhalation device 100 is activated, and if there is abnormality detection information Id stored in the memory 21, acquire the abnormality detection information Id. In this way, also, when the inhalation device 100 is activated for the first time after an abnormality has been detected, for example, the MCU 70 can acquire the abnormality detection information Id that was stored in the memory 21 due to the detection of the abnormality.

Furthermore, the MCU 70 can change the control performed after an abnormality has been detected, on the basis of the acquired abnormality detection information Id. In the present embodiment, the MCU 70 can adopt two control modes, namely a "normal mode" that allows power to be supplied to the components of the inhalation device 100, including the heater unit 60, and a "failure mode" that inhibits the supply of power to the components.

When the MCU 70 is in the normal mode, power may be supplied to the components of the inhalation device 100, including the heater unit 60, and thus the user can use the inhalation device 100. Meanwhile, when the MCU 70 is in the failure mode, power is no longer supplied to the components of the inhalation device 100, including the heater unit 60, and thus the user cannot use the inhalation device 100. It should be noted that, for example, the MCU 70 is configured not to cancel the failure mode after having once entered the failure mode.

Furthermore, for example, the MCU 70 is configured to be in the normal mode until an abnormality is detected, and to enter the failure mode after an abnormality has been detected. In other words, the MCU 70 is in the normal mode when there is no abnormality detection information Id stored in the memory 21, and enters the failure mode when there is abnormality detection information Id stored in the memory 21. This makes it possible to restrict the supply of power to the components, including the heater unit 60, after an abnormality has been detected, thereby ensuring the safety of the inhalation device 100.

Furthermore, the MCU 70 may determine the type of the detected abnormality on the basis of the acquired abnormality detection information Id, and change the control performed after the abnormality has been detected on the basis of the determination result of the type of abnormality.

For example, if the abnormality detection information Id includes information indicating the type of the detected abnormality, as shown in fig. 3 and fig. 4, the MCU 70 may derive the type of the abnormality indicated by the abnormality detection information Id directly as the determination result of the type of the detected abnormality. Meanwhile, if the abnormality detection information Id includes information representing the state of the inhalation device 100 when the abnormality was detected, as shown in fig. 5, the MCU 70 may determine the type of the detected abnormality on the basis of the parameter that has exceeded its threshold or the signal indicating that the threshold has been exceeded, such as the battery temperature abnormality if the battery temperature indicated by the abnormality detection information Id exceeds the threshold. The MCU 70 may then set the control mode to be used after the abnormality has been detected to the normal mode or the failure mode on the basis of the determination result of the type of the detected abnormality.

Fig. 8 is a diagram showing an example of setting information defining the control modes of the MCU 70 after various types of abnormalities have been detected. Settings information Is shown in fig. 8 is prestored in the MCU 70 by the manufacturer of the inhalation device 100, for example.

In the settings information Is in the example shown in fig. 8, the control mode after the battery temperature abnormality or the heater temperature abnormality have been detected is defined to be the normal mode. Meanwhile, the control mode after the current value abnormality has been detected is defined to be the failure mode. Therefore, in the present example, on the basis of the settings information Is, the MCU 70 is set to the normal mode when the battery temperature abnormality or the heater temperature abnormality has been detected, but is set to the failure mode when the current value abnormality has been detected. It should be noted that the control mode to be used after various types of abnormalities are detected is not limited to the example described here, and may be determined arbitrarily by the manufacturer of the inhalation device 100, for example.

In this way, by changing the control performed by the MCU 70 on the basis of the type of the detected abnormality, it is possible to perform control that takes into account the type of the detected abnormality, such as adopting the failure mode when one type of abnormality is detected, and adopting the normal mode when another type of abnormality is detected. This makes it possible to perform control such that, for example, if the detected abnormality is relatively minor from the viewpoint of safety, the user can still use the inhalation device 100 even after the abnormality has been detected, but if another abnormality is detected, the user is prevented from using the inhalation device 100 after the abnormality has been detected. It is therefore possible to allow more flexible control in response to a detected abnormality, while taking into considering the safety of the inhalation device 100, and to suppress a reduction in user convenience.

It should be noted that, although the control performed after an abnormality has been detected is made to differ here depending on the type of the abnormality, this is not limiting. For example, the control may be changed on the basis of the number of times an abnormality has been detected. For example, the MCU 70 may be set to the normal mode until any abnormality has been detected n times (n is a natural number greater than or equal to 2, for example), and be set to the failure mode after any abnormality has been detected n or more times. Furthermore, the MCU 70 may be set to the normal mode until a specific type of abnormality has been detected n times, and be set to the failure mode after that type of abnormality has been detected n or more times.

In addition, the MCU 70 may change the control on the basis that any abnormality has been detected a number of times corresponding to the type of the abnormality. More specifically, for example, the configuration may be such that if the battery temperature abnormality is detected i times (i is a natural number, for example), the heater temperature abnormality is detected j times (j is a natural number different from i, for example), or the current value abnormality is detected k times (k is a natural number different from i and j, for example), the MCU 70 changes the subsequent control mode from the normal mode to the failure mode.

Furthermore, if the abnormality detection information Id includes information representing the state of the inhalation device 100 when the abnormality was detected, the MCU 70 may, for example, determine the extent of the detected abnormality and change to the failure mode depending on the degree of the abnormality. More specifically, for example, the configuration may be such that if the battery temperature when the battery temperature abnormality was detected was below a predetermined value, the MCU 70 is set to the normal mode even after the battery temperature abnormality is detected, but if the battery temperature was higher than the predetermined value, the MCU 70 is set to the failure mode after the battery temperature abnormality is detected. This allows the MCU 70 to perform flexible control depending on the degree of the detected abnormality, thereby making it possible to improve the safety and convenience of the inhalation device 100.

Furthermore, for example, the MCU 70 may be configured to be capable of selecting whether or not the remaining capacity meter IC 20 is to store the abnormality detection information Id in the memory 21. In other words, the remaining capacity meter IC 20 may be configured to be capable of changing whether or not to store the abnormality detection information Id in the memory 21 in accordance with an instruction from the MCU 70, for example. More specifically, for example, the configuration may be such that when the remaining capacity meter IC 20 receives an instruction from the MCU 70 to turn off the function for storing the abnormality detection information Id, the remaining capacity meter IC does not subsequently detect abnormalities based on the input parameters or signals or store the abnormality detection information Id in the memory 21 until it receives an instruction from the MCU 70 to turn on the storage function.

For example, the MCU 70 checks the operation of the inhalation device 100 when the inhalation device 100 is activated. In this operation check, the MCU 70 intentionally creates a state in which an abnormality of the inhalation device 100 can be detected, such as by inputting the nOVER_HEAT signal to the remaining capacity meter IC 20 regardless of the actual heater temperature, and then checks whether the remaining capacity meter IC 20 can correctly detect the abnormality. When, in this way, intentionally creating a state in which an abnormality of the inhalation device 100 can be detected, the MCU 70 temporarily turns off the abnormality detection information Id storage function by sending an instruction to the remaining capacity meter IC 20, to thereby turn off the abnormality detection information Id storage function. Then, after confirming the operation of the inhalation device 100, and before starting the heating control, for example, the MCU 70 turns on the abnormality detection information Id storage function by sending an instruction to the remaining capacity meter IC 20, to thereby turn on the abnormality detection information Id storage function.

In this way, by configuring the remaining capacity meter IC 20 to be capable of changing whether or not to store the abnormality detection information Id in the memory 21, it is possible to suppress storage, in the memory 21, of abnormality detection information Id unrelated to an abnormality that has actually occurred in the inhalation device 100, that is, unnecessary abnormality detection information Id. It is therefore possible to suppress an increase in the number of times the memory 21, which may comprise a non-volatile storage medium, is rewritten, and to suppress a deterioration in the quality of the abnormality detection information Id stored in memory 21, that would result from unnecessary abnormality detection information Id being stored in the memory 21.

### [4. Advantageous effects of the embodiment]

As described above, the inhalation device 100 of the present embodiment comprises the power source unit 111, the MCU 70 serving as an example of a first control unit, and the remaining capacity meter IC 20 serving as an example of a second control unit. The remaining capacity meter IC 20 is configured to be capable of accepting input of parameters or signals representing the state of the inhalation device 100, and to store information relating to the inhalation device 100 based on the parameters or signals in the memory 21. Furthermore, when an abnormality is detected in the inhalation device 100 on the basis of the input parameters or signals, the remaining capacity meter IC 20 stores the abnormality detection information Id, which is information relating to the detected abnormality, in the memory 21 as information relating to the inhalation device 100, and the MCU 70 is configured to be capable of acquiring the abnormality detection information Id stored in the memory 21 in this manner.

Therefore, according to the inhalation device 100, even if the MCU 70 is in a state in which it cannot operate normally (for example, a state in which the MCU 70 itself is unable to store information relating to a detected abnormality) when an abnormality is detected in the inhalation device 100, the MCU 70 can acquire the abnormality detection information Id at any subsequent timing. As a result, even if the MCU 70 is in a state in which it cannot operate normally when an abnormality is detected in the inhalation device 100, the MCU 70 can subsequently ascertain that an abnormality has been detected in the inhalation device 100, and can perform control that takes the safety of the inhalation device 100 into consideration. Therefore, the safety of the inhalation device 100 can be improved.

Furthermore, the abnormality detection information Id includes information indicating that an abnormality has been detected, information representing the state of the inhalation device 100 when the abnormality was detected, or information indicating the type of the detected abnormality. As a result, the MCU 70 can ascertain, at any timing after an abnormality is detected in the inhalation device 100, the fact that an abnormality has been detected in the inhalation device 100, the state of the inhalation device 100 when the abnormality was detected, or the type of the detected abnormality, thereby making it possible to perform control that takes the safety of the inhalation device 100 into consideration. Therefore, the safety of the inhalation device 100 can be improved.

Furthermore, the MCU 70 is configured to be capable of changing the control performed after an abnormality is detected on the basis of the acquired abnormality detection information Id. This allows the control performed by the MCU 70 to be changed on the basis that an abnormality has been detected in the inhalation device 100, making it possible to perform control that takes the safety of the inhalation device 100 into consideration. Therefore, the safety of the inhalation device 100 can be improved.

Furthermore, the abnormality detection information Id includes information representing the state of the inhalation device 100 when the abnormality was detected, or information indicating the type of the detected abnormality, and the MCU 70 is configured to be capable of determining the type of the detected abnormality on the basis of the acquired abnormality detection information Id, and of changing the control performed after the abnormality is detected on the basis of the abnormality type determination result. This allows the control performed by the MCU 70 to be changed on the basis of the type of the abnormality detected in the inhalation device 100, making it possible to perform control that takes into consideration the safety and convenience of the inhalation device 100. Therefore, the safety and convenience of the inhalation device 100 can be improved.

Furthermore, when an abnormality is detected, the remaining capacity meter IC 20 outputs an abnormality detection signal to the MCU 70. It is thus possible to notify the MCU 70 that an abnormality has been detected in the inhalation device 100 by means of the abnormality detection signal from the remaining capacity meter IC 20. As a result, if the MCU 70 is in a state in which it can operate normally when an abnormality is detected in the inhalation device 100, the MCU 70 can quickly ascertain that an abnormality has been detected in the inhalation device 100, and can quickly perform control that takes into consideration the safety of the inhalation device 100, such as executing processing to be performed when an abnormality occurs. Therefore, the safety of the inhalation device 100 can be improved.

Furthermore, the parameters input to the remaining capacity meter IC 20 include a plurality of types of parameters. This makes it possible to increase the types of abnormalities that can be detected and improve the abnormality detection accuracy compared to a case in which a single type of parameter is input to the remaining capacity meter IC 20. Furthermore, in the examples described above, the signal input to the remaining capacity meter IC 20 is the nOVER_HEAT signal, but, for example, in addition to the nOVER_HEAT signal, other signals representing the state of the inhalation device 100 may also be input to the remaining capacity meter IC 20. That is, the signal input to the remaining capacity meter IC 20 may include a plurality of types of signal. This makes it possible to increase the types of abnormalities that can be detected and improve the abnormality detection accuracy compared to a case in which a single type of signal is input to the remaining capacity meter IC 20.

In addition, the inhalation device 100 is provided with the switch SW4 for turning on and off the supply of power to the heater unit 60 constituting the heating unit 121, and the remaining capacity meter IC 20 outputs an abnormality detection signal to the switch SW4 when an abnormality is detected. The switch SW4 then turns off the supply of power to the heater unit 60 in response to an abnormality detection signal from the remaining capacity meter IC 20. As a result, the supply of power to the heater unit 60 (that is, the heating unit 121) can be switched off by means of the abnormality detection signal from the remaining capacity meter IC 20. As a result, the supply of power to the heater unit 60 can be turned off even if the MCU 70 is in a state in which it cannot operate normally when an abnormality is detected in the inhalation device 100, thereby restricting the supply of unintended power to the heater unit 60 and improving the safety of the inhalation device 100.

Furthermore, if an abnormality is detected while the power source unit 111 is being charged, the remaining capacity meter IC 20 stops the charging of the power source unit 111. As a result, even if an abnormality is detected while the power source unit 111 is being charged but the MCU 70 is in a state in which it cannot operate normally when the abnormality is detected, it is possible to stop the charging of the power source unit 111, thereby improving the safety of the inhalation device 100.

More specifically, if an abnormality is detected while the power source unit 111 is being charged, the remaining capacity meter IC 20 stops the charging operation of the charging IC 30, thereby stopping the charging of the power source unit 111. This allows the charging of the power source unit 111 to be stopped more reliably and easily when an abnormality is detected while the power source unit 111 is being charged.

Furthermore, the remaining capacity meter IC 20 is configured to be capable of changing whether or not to store the abnormality detection information Id in the memory 21. This makes it possible to restrict storage of unnecessary abnormality detection information Id in the memory 21.

Furthermore, the MCU 70 may be configured to be capable of acquiring, from the remaining capacity meter IC 20, the abnormality detection information Id stored in the memory 21 provided in the remaining capacity meter IC 20, as shown in fig. 2, for example. This allows the MCU 70 to acquire the abnormality detection information Id stored in the memory 21 of the remaining capacity meter IC 20.

Furthermore, the MCU 70 may, for example, be configured to be capable of acquiring, from the memory 21, the abnormality detection information Id stored in the memory 21 that is accessible to both the MCU 70 and the remaining capacity meter IC 20, as shown in fig. 7. This allows the MCU 70 to directly acquire the abnormality detection information Id stored in the memory 21 provided so as to be accessible to both the MCU 70 and the remaining capacity meter IC 20.

Furthermore, the remaining capacity meter IC 20, which stores the abnormality detection information Id in the memory 21, is an IC configured to be capable of acquiring information indicating the remaining capacity of the power source unit 111 on the basis of an input parameter or signal. This makes it possible to utilize the remaining charge meter IC 20, which is an IC into which parameters or signals representing the state of the inhalation device 100 are input in order to acquire information indicating the remaining capacity of the power source unit 111, to detect abnormalities in the inhalation device 100 and to store the abnormality detection information Id in the memory 21.

Furthermore, the parameters or signals input to the remaining capacity meter IC 20 include parameters or signals related to the temperature (that is, the heater temperature) of the heater unit 60 constituting the heating unit 121, and the remaining capacity meter IC 20 is configured to be capable of detecting abnormalities related to the heater temperature on the basis of these parameters or signals. This makes it possible for the remaining capacity meter IC 20, which is for acquiring information indicating the remaining capacity of the power source unit 111, to additionally detect abnormalities related to the heater temperature.

It should be noted that in the present embodiment, the remaining capacity meter IC 20 is used to detect abnormalities of the inhalation device 100 and store the abnormality detection information Id in the memory 21, but this is not limiting. For example, instead of the remaining capacity meter IC 20, another control unit (but a control unit different from MCU 70) to which parameters or signals representing the state of the inhalation device 100 are input may be used to detect abnormalities of the inhalation device 100 and store the abnormality detection information Id in the memory 21. However, in this case, the memory 21 in which the abnormality detection information Id can be stored is to be provided inside or outside the other control unit (more specifically, the IC that realizes the other control unit) so as to be accessible to the other control unit.

Furthermore, the inhalation device 100 of the present embodiment includes the power source unit 111, the MCU 70 serving as an example of a first control unit, and the remaining capacity meter IC 20 serving as an example of a second control unit. The remaining capacity meter IC 20 is configured to be capable of accepting input of parameters or signals representing the state of the inhalation device 100, and to acquire information indicating the remaining capacity of the power source unit 111 on the basis of the parameters or signals. Furthermore, the parameters or signals input to the remaining capacity meter IC 20 include parameters or signals related to the temperature (that is, the heater temperature) of the heater unit 60 constituting the heating unit 121, and the remaining capacity meter IC 20 is configured to be capable of stopping the supply of power to the heater unit 60 if an abnormality related to the heater temperature is detected on the basis of the input parameters or signals.

Therefore, according to the inhalation device 100, when an abnormality related to the heater temperature is detected, the remaining capacity meter IC 20 can stop the supply of power to the heater unit 60. As a result, the supply of power to the heater unit 60 can be turned off utilizing the remaining capacity meter IC 20, which is for acquiring information indicating the remaining capacity of the power source unit 111, even if the MCU 70 is in a state in which it cannot operate normally when an abnormality related to the heater temperature is detected, thereby restricting the supply of unintended power to the heater unit 60 and improving the safety of the inhalation device 100.

Furthermore, as discussed hereinabove, according to the configuration of the present embodiment, it is possible to stop the charging of the power source unit 111 by means of the remaining capacity meter IC 20, without the intervention of the MCU 70. To configure such an embodiment, it is also conceivable, for example, to provide a flip-flop circuit in the inhalation device 100 and to arrange for the nOVER_HEAT signal from the comparator CP to be input to the flip-flop circuit, and for the flip-flop circuit to output an abnormality detection signal to the switch SW4, etc., in response to the input of the nOVER_HEAT signal.

However, with a configuration in which such a flip-flop circuit is provided, the number of components of the inhalation device 100 may increase due to the addition of the flip-flop circuit. Therefore, the configuration of the inhalation device 100 may become complicated, and the manufacturing cost of the inhalation device 100 may increase. However, according to the configuration of the present embodiment, utilizing the remaining capacity meter IC 20 eliminates the need to provide a separate flip-flop circuit as described above, and makes it possible to ensure the safety of the inhalation device 100 while suppressing an increase in the number of components of the inhalation device 100.

Furthermore, if a flip-flop circuit such as that described above is configured to output an abnormality detection signal, the resistance to noise may also be reduced in comparison with the configuration of the present embodiment. More specifically, if a flip-flop circuit is configured to output an abnormality detection signal, when noise is input to the flip-flop circuit, a situation may also arise in which the noise causes the flip-flop circuit to output an abnormality detection signal (latch signal). That is, even if no abnormality has occurred in the inhalation device 100, erroneous detection of an abnormality may occur, such as an abnormality detection signal being output due to the input of noise into the flip-flop circuit.

In contrast, according to the configuration of the present embodiment, since the remaining capacity meter IC 20 outputs the abnormality detection signal, it is also possible to adopt a configuration in which the abnormality detection signal is only output only when there is a high probability that an abnormality has actually occurred, such as when a predetermined parameter has exceeded a threshold multiple times in succession. It is therefore also possible to suppress excessive output of the abnormality detection signal despite no abnormality having occurred, thereby preventing a decrease in user convenience.

Embodiments of the power supply unit for an aerosol generating device according to the present disclosure have been described above, but it goes without saying that the present invention is not limited to such embodiments. It is obvious that a person skilled in the art will be able to conceive of a number of variant examples or modified examples within the scope disclosed in the claims, and any such variant examples or modified examples are naturally understood to fall within the technical scope of the present disclosure. Furthermore, the components in the embodiments described above may be combined in any way within a scope that does not depart from the essential point of the invention.

The present specification, etc. sets forth at least the following features. Corresponding components, etc. in the embodiments described above are shown by way of example in parentheses, but there is no limitation to such components.

(1) A power supply unit (inhalation device 100, 100B; power supply unit 110) for an aerosol generating device (inhalation device 100, 100A, 100B) for generating an aerosol by heating an aerosol source, the power supply unit comprising
   a power source unit (power source unit 111, 111A, 111B) configured to be capable of supplying power to a heating unit (heating unit 121, 121A, 121B; heater unit 60) for heating the aerosol source,
   a first control unit (control unit 116, 116A, 116B; MCU 70) configured to be capable of controlling the supply of power from the power source unit to the heating unit, and
   a second control unit (remaining capacity meter IC 20) configured to accept input of a parameter or a signal representing a state of the power supply unit and to be capable of storing information relating to the power supply unit based on the parameter or signal in a memory unit (memory 21),
   wherein,
   when an abnormality is detected in the power supply unit on the basis of the parameter or the signal, the second control unit stores information (abnormality detection information Id) relating to the detected abnormality in the memory unit as information relating to the power supply unit, and
   the first control unit is further configured to be capable of acquiring the information relating to the abnormality stored in the memory unit.

According to (1), even if the first control unit is in a state in which it cannot operate normally when an abnormality is detected in the power supply unit, the first control unit can acquire the information relating to the detected fault at any subsequent timing. As a result, even if the first control unit is in a state in which it cannot operate normally when an abnormality is detected in the power supply unit, the first control unit can subsequently ascertain that an abnormality has been detected in the power supply unit, and can perform control that takes the safety of the power supply unit into consideration. Therefore, the safety of the power supply unit can be improved.

(2) The power supply unit as disclosed in (1), wherein
the information relating to the abnormality includes information indicating that an abnormality has been detected, information representing a state of the power supply unit when the abnormality was detected, or information indicating the type of the detected abnormality.

According to (2), the first control unit can ascertain, at any timing after an abnormality is detected in the power supply unit, the fact that an abnormality has been detected in the power supply unit, the state of the power supply unit when the abnormality was detected, or the type of the detected abnormality, thereby making it possible to perform control that takes the safety of the power supply unit into consideration. Therefore, the safety of the power supply unit can be improved.

(3) The power supply unit as disclosed in (1) or (2), wherein
the first control unit is further configured to be capable of changing the control performed after the abnormality is detected, on the basis of the acquired information relating to the abnormality.

According to (3), the control performed by the first control unit can be changed on the basis that an abnormality has been detected in the power supply unit, making it possible to perform control that takes the safety of the power supply unit into consideration. Therefore, the safety of the power supply unit can be improved.

(4) The power supply unit as disclosed in (3), wherein
the information relating to the abnormality includes information representing the state of the power supply unit when the abnormality was detected, or information indicating the type of the detected abnormality, and
the first control unit is configured to be capable of determining the type of the detected abnormality on the basis of the acquired information relating to the abnormality, and of changing the control performed after the abnormality has been detected on the basis of the determination result of the type of abnormality.

According to (4), the control performed by the first control unit can be changed on the basis of the type of the abnormality detected in the power supply unit, making it possible to perform control that takes the safety and convenience of the power supply unit into consideration.

(5) The power supply unit as disclosed in any of (1) to (4), wherein
the second control unit further outputs an abnormality detection signal to the first control unit when the abnormality is detected.

According to (5), it is possible to notify the first control unit that an abnormality has been detected in the power supply unit by means of the abnormality detection signal from the second control unit. As a result, if the first control unit is in a state in which it can operate normally when an abnormality is detected in the power supply unit, the first control unit can quickly ascertain that an abnormality has been detected in the power supply unit, and can quickly perform control that takes into consideration the safety of the power supply unit. Therefore, the safety of the power supply unit can be improved.

(6) The power supply unit as disclosed in any of (1) to (5), wherein
the parameter or signal input to the second control unit includes a plurality of types of parameters or signals.

According to (6), it is possible to increase the types of abnormalities that can be detected and improve the abnormality detection accuracy compared to a case in which a single type of signal is input to the second control unit.

(7) The power supply unit as disclosed in any of (1) to (6), wherein
the power supply unit further comprises a switch (switch SW4) for turning on and off the supply of power to the heating unit,
the second control unit further outputs an abnormality detection signal to the switch when the abnormality is detected, and
the switch turns off the supply of power to the heating unit in response to the abnormality detection signal.

According to (7), the supply of power to the heating unit can be switched off by means of the abnormality detection signal from the second control unit. As a result, the supply of power to the heating unit can be turned off even if the first control unit is in a state in which it cannot operate normally when an abnormality is detected in the power supply unit, thereby restricting the supply of unintended power to the heating unit and improving the safety of the power supply unit.

(8) The power supply unit as disclosed in any of (1) to (7), wherein
the power source unit is further configured to be capable of being charged by means of power received from an external power source, and
the second control unit stops the charging of the power source unit if the abnormality is detected while the power source unit is being charged.

According to (8), even if an abnormality is detected while the power source unit is being charged but the first control unit is in a state in which it cannot operate normally when the abnormality is detected, it is possible to stop the charging of the power source unit, thereby improving the safety of the power supply unit.

(9) The power supply unit as disclosed in (8), wherein
the power supply unit further comprises a charging IC (charging IC 30) for charging the power source unit by supplying power received from the external power source to the power source unit, and
the second control unit stops the charging of the power source unit by stopping the charging operation of the charging IC if the abnormality is detected while the power source unit is being charged.

According to (9), the charging of the power source unit can be stopped more reliably and easily when an abnormality is detected while the power source unit is being charged.

(10) The power supply unit as disclosed in any of (1) to (9), wherein
the second control unit is configured to be capable of changing whether or not to store the information relating to the abnormality in the memory unit.

According to (10), since the second control unit is able to change whether or not to store the information relating to the abnormality in the memory unit, it is possible to suppress storage, in the memory unit, of unnecessary information relating to abnormalities.

(11) The power supply unit as disclosed in any of (1) to (10), wherein
the first control unit is configured by one IC (MCU 70),
the second control unit is configured by another IC (remaining capacity meter IC 20) that is able to communicate with the one IC,
the memory unit is configured by a memory (memory 21) provided in the other IC, and
the one IC acquires information relating to the abnormality, stored in the memory, from the other IC.

According to (11), it is possible for the one IC, serving as the first control unit, to acquire information relating to the abnormality, stored in the memory of the other IC serving as the second control unit.

(12) The power supply unit as disclosed in any of (1) to (10), wherein
the first control unit is configured by one IC (MCU 70),
the second control is configured by another IC (remaining capacity meter IC 20) different from the one IC,
the memory unit is configured by a memory (memory 21) that is accessible to both the one IC and the other IC, and
the one IC acquires information relating to the abnormality, stored in the memory, from the memory.

According to (12), it is possible for the one IC, serving as the first control unit, to acquire information relating to the abnormality, stored in the memory that is provided so as to be accessible to both the one IC and the other IC serving as the second control unit.

(13) The power supply unit as disclosed in (11) or (12), wherein
the other IC is a remaining capacity meter IC (remaining capacity meter IC 20) configured to be capable of acquiring information indicating the remaining capacity of the power source unit on the basis of the parameter or signal.

According to (13), it is possible to utilize the remaining charge meter IC, into which a parameter or signal representing the state of the power supply unit is input in order to acquire information indicating the remaining capacity of the power source unit, to store information relating to the abnormality, in the memory.

(14) The power supply unit as disclosed in (13), wherein
the parameter or signal includes a parameter or signal relating to the temperature of the heating unit, and
the remaining capacity meter IC is further configured to be capable of detecting the abnormality relating to the temperature of the heating unit on the basis of the parameter or signal.

According to (14), it is possible for the remaining capacity meter IC, which is for acquiring information indicating the remaining capacity of the power source unit, to detect abnormalities related to the temperature of the heating unit.

(15) A power supply unit (inhalation device 100, 100B; power supply unit 110) for an aerosol generating device (inhalation device 100, 100A, 100B) for generating an aerosol by heating an aerosol source, the power supply unit comprising
a power source unit (power source unit 111, 111A, 111B) configured to be capable of supplying power to a heating unit (heating unit 121, 121A, 121B; heater unit 60) for heating the aerosol source,
a first control unit (control unit 116, 116A, 116B; MCU 70) configured to be capable of controlling the supply of power from the power source unit to the heating unit, and
a second control unit (remaining capacity meter IC 20) configured to accept input of a parameter or a signal representing a state of the power supply unit and to be capable of acquiring information indicating the remaining capacity of the power source unit on the basis of the parameter or signal,
wherein,
the parameter or signal includes a parameter or signal relating to the temperature of the heating unit, and
the second control is further configured to be capable of stopping the supply of power to the heating unit if an abnormality relating to the temperature of the heating unit is detected on the basis of the parameter or the signal.

According to (15), when an abnormality related to the temperature of the heating unit is detected, the second control unit can stop the supply of power to the heating unit. As a result, the supply of power to the heating unit can be stopped utilizing the second control unit, which is for acquiring information indicating the remaining capacity of the power source unit, even if the first control unit is in a state in which it cannot operate normally when an abnormality related to the power supply unit is detected, thereby restricting the supply of unintended power to the heating unit and improving the safety of the power supply unit.

### REFERENCE SIGNS LIST

20 Remaining capacity meter IC (second control unit)
21 Memory (memory unit)
60 Heater unit (heating unit)
70 MCU (first control unit)
100, 100A, 100B Inhalation device (aerosol generating device, power supply unit)
110 Power supply unit
111, 111A, 111BPower source unit (power source unit)
116, 116A, 116BControl unit (first control unit)
121, 121A, 121BHeating unit

## Claims

1. A power supply unit for an aerosol generating device for generating an aerosol by heating an aerosol source, the power supply unit comprising
a power source unit configured to be capable of supplying power to a heating unit for heating the aerosol source,
a first control unit configured to be capable of controlling the supply of power from the power source unit to the heating unit, and
a second control unit configured to accept input of a parameter or a signal representing a state of the power supply unit and to be capable of storing information relating to the power supply unit based on the parameter or signal in a memory unit,
wherein,
when an abnormality is detected in the power supply unit on the basis of the parameter or the signal, the second control unit stores information relating to the detected abnormality in the memory unit as information relating to the power supply unit, and
the first control unit is further configured to be capable of acquiring the information relating to the abnormality stored in the memory unit.

2. The power supply unit as claimed in claim 1, wherein
the information relating to the abnormality includes information indicating that an abnormality has been detected, information representing a state of the power supply unit when the abnormality was detected, or information indicating the type of the detected abnormality.

3. The power supply unit as claimed in claim 1 or 2, wherein
the first control unit is further configured to be capable of changing the control performed after the abnormality is detected, on the basis of the acquired information relating to the abnormality.

4. The power supply unit as claimed in claim 3, wherein
the information relating to the abnormality includes information representing the state of the power supply unit when the abnormality was detected, or information indicating the type of the detected abnormality, and
the first control unit is configured to be capable of determining the type of the detected abnormality on the basis of the acquired information relating to the abnormality, and of changing the control performed after the abnormality has been detected on the basis of the determination result of the type of abnormality.

5. The power supply unit as claimed in any one of claims 1 to 4, wherein
the second control unit further outputs an abnormality detection signal to the first control unit when the abnormality is detected.

6. The power supply unit as claimed in any one of claims 1 to 5, wherein
the parameter or signal input to the second control unit includes a plurality of types of parameters or signals.

7. The power supply unit as claimed in any one of claims 1 to 6, wherein
the power supply unit further comprises a switch for turning on and off the supply of power to the heating unit,
the second control unit further outputs an abnormality detection signal to the switch when the abnormality is detected, and
the switch turns off the supply of power to the heating unit in response to the abnormality detection signal.

8. The power supply unit as claimed in any one of claims 1 to 7, wherein
the power source unit is further configured to be capable of being charged by means of power received from an external power source, and
the second control unit stops the charging of the power source unit if the abnormality is detected while the power source unit is being charged.

9. The power supply unit as claimed in claim 8, wherein
the power supply unit further comprises a charging IC for charging the power source unit by supplying power received from the external power source to the power source unit, and
the second control unit stops the charging of the power source unit by stopping the charging operation of the charging IC if the abnormality is detected while the power source unit is being charged.

10. The power supply unit as claimed in any one of claims 1 to 9, wherein
the second control unit is configured to be capable of changing whether or not to store the information relating to the abnormality in the memory unit.

11. The power supply unit as claimed in any one of claims 1 to 10, wherein
the first control unit is configured by one IC,
the second control unit is configured by another IC that is able to communicate with the one IC,
the memory unit is configured by a memory provided in the other IC, and
the one IC acquires information relating to the abnormality, stored in the memory, from the other IC.

12. The power supply unit as claimed in any one of claims 1 to 10, wherein
the first control unit is configured by one IC,
the second control is configured by another IC different from the one IC,
the memory unit is configured by a memory that is accessible to both the one IC and the other IC, and
the one IC acquires information relating to the abnormality, stored in the memory, from the memory.

13. The power supply unit as claimed in claim 11 or 12, wherein
the other IC is a remaining capacity meter IC configured to be capable of acquiring information indicating the remaining capacity of the power source unit on the basis of the parameter or signal.

14. The power supply unit as claimed in claim 13, wherein
the parameter or signal includes a parameter or signal relating to the temperature of the heating unit, and
the remaining capacity meter IC is further configured to be capable of detecting the abnormality relating to the temperature of the heating unit on the basis of the parameter or signal.

15. A power supply unit for an aerosol generating device for generating an aerosol by heating an aerosol source, the power supply unit comprising
a power source unit configured to be capable of supplying power to a heating unit for heating the aerosol source,
a first control unit configured to be capable of controlling the supply of power from the power source unit to the heating unit, and
a second control unit configured to accept input of a parameter or a signal representing a state of the power supply unit and to be capable of acquiring information indicating the remaining capacity of the power source unit on the basis of the parameter or signal,
wherein,
the parameter or signal includes a parameter or signal relating to the temperature of the heating unit, and
the second control is further configured to be capable of stopping the supply of power to the heating unit if an abnormality relating to the temperature of the heating unit is detected on the basis of the parameter or the signal.
